(19) Europäisches Patentamt
European Patent Office
Office européen des brevets

(11) **EP 4 761 449 A1**

(12) **EUROPEAN PATENT APPLICATION**
published in accordance with Art. 153(4) EPC

(43) Date of publication:
**17.06.2026 Bulletin 2026/25**

(21) Application number: **23948767.1**

(22) Date of filing: **11.08.2023**

(51) International Patent Classification (IPC):
**H04W 74/08** (2024.01)

(52) Cooperative Patent Classification (CPC):
**H04W 74/08**

(86) International application number:
**PCT/CN2023/112767**

(87) International publication number:
**WO 2025/035332 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **1FINITY Inc.**
**Kawasaki-shi, Kanagawa 211-8588 (JP)**

(72) Inventors:
• **JIANG, Qinyan**
 **Beijing 100022 (CN)**
• **ZHANG, Lei**
 **Beijing 100022 (CN)**
• **TIAN, Yan**
 **Beijing 100022 (CN)**

(74) Representative: **Haseltine Lake Kempner LLP**
**Cheapside House**
**138 Cheapside**
**London EC2V 6BJ (GB)**

(54) **INFORMATION RECEIVING METHOD AND APPARATUS, AND INFORMATION SENDING METHOD AND APPARATUS**

(57) Embodiments of this disclosure provide an information reception method, an information transmission method and apparatuses thereof. The apparatus includes: a first receiving unit configured to receive one or more second configuration information transmitted by a network device, wherein one second configuration information includes one or more first configuration information, one first configuration information including first information for configuring a feature combination, and/or second information for configuring a random access preamble sequence, and/or third information for configuring RO group(s), and/or fourth information for configuring RO(s), and/or fifth information for configuring RO(s).

4501

a terminal equipment receives one or more second configuration information transmitted by a network device, wherein one second configuration information includes one or more first configuration information, one first configuration information including first information for configuring a feature combination, and/or second information for configuring a random access preamble sequence, and/or third information for configuring RO group(s), and/or fourth information for configuring RO(s), and/or fifth information for configuring RO(s).

**Fig.45**

EP 4 761 449 A1

**Description**

Technical Field

This disclosure relates to the field of communication technologies.

Background

Coverage is one of the key factors considered by operators in a commercialization process of cellular communication networks, which directly affects service quality as well as capital expenditure (CAPEX) and operational expenditure (OPEX). In most scenarios of actual deployment, uplink performance may be a bottleneck. For example, there currently exist some emerging vertical use cases with very high uplink traffic, such as video uploading, etc. In Release 17 (Rel-17 in brief), the 3rd Generation Partnership Project (3GPP) discussed coverage extension of some bottleneck channels (including physical uplink shared channel (PUSCH), physical uplink control channel (PUCCH), Msg3). However, not all requirements for coverage enhancement have been addressed. For example, although a physical random access channel (PRACH) is also one of the bottleneck channels, coverage enhancement of the PRACH has not yet been solved. Therefore, in the NR coverage enhancement work of Rel-18, PRACH coverage enhancement is one of the key objectives.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

One of the solutions for enhancing the coverage of the PRACH is to support PRACH repetition. For example, a terminal equipment may transmit multiple PRACHs carrying identical random access preamble sequence in a random access attempt (RACH attempt, or random access channel attempt). Correspondingly, a network device may perform joint detection on random access preamble sequence carried by different PRACHs. Therefore, when the transmission loss between the terminal equipment and the base station is relatively large (such as due to long distances or existence of obstructions), the network device may still successfully detect the random access preamble sequence transmitted by the terminal equipment, thereby achieving an effect of expanding the coverage of the PRACHs, that is, enhancing the coverage of the PRACHs. However, there is currently no specific solution for how to support a 4-step random access type of PRACH repetition.

In order to solve at least one of the above problems, embodiments of this disclosure provide an information reception method, an information transmission method and apparatuses thereof.

According to one aspect of the embodiments of this disclosure, there is provided an information reception apparatus, applicable to a terminal equipment, the apparatus including:

a first receiving unit configured to receive one or more second configuration information transmitted by a network device, wherein one second configuration information includes one or more first configuration information, one first configuration information including first information for configuring a feature combination, and/or second information for configuring a random access preamble sequence, and/or third information for configuring RO group(s), and/or fourth information for configuring RO(s), and/or fifth information for configuring RO(s).

According to another aspect of the embodiments of this disclosure, there is provided an information transmission apparatus, applicable to a network device, the apparatus including:

a first transmitting unit configured to transmit one or more second configuration information to a terminal equipment, wherein one second configuration information includes one or more first configuration information, one first configuration information including first information for configuring a feature combination, and/or second information for configuring a random access preamble sequence, and/or third information for configuring RO group(s), and/or fourth information for configuring RO(s), and/or fifth information for configuring RO(s).

According to a further aspect of the embodiments of this disclosure, there is provided a communication system, including the terminal equipment as described in the one aspect and/or the network device as described in the other aspect.

An advantage of the embodiments of this disclosure exists in that a method for supporting PRACH repetition is provided, hence, coverage of the PRACHs may be expanded, and uplink coverage may be enhanced, thereby improving service quality of the network device and lowering capital expenditure (CAPEX) and operational expenditure (OPEX).

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is schematic diagram of a communication system of embodiments of this disclosure;
FIGs. 2A and FIGs. 2B are schematic diagrams of a random access procedure;
FIG. 3 is a schematic diagram of an information transceiving method of an embodiments of this disclosure;
FIGs. 4- FIGs. 38 are schematic diagram of SSB-RO/RO group mapping of embodiments of this disclosure;
FIG. 39 is a schematic diagram of an information transceiving method of embodiments of this disclosure;
FIG. 40 is a schematic diagram of an information transceiving apparatus of embodiments of this disclosure;
FIG. 41 is a schematic diagram of an information transceiving apparatus of embodiments of this disclosure;
FIG. 42 is a schematic diagram of a network device of embodiments of this disclosure;
FIG. 43 is a schematic diagram of a terminal equipment of embodiments of this disclosure;
FIG. 44 is a schematic diagram of a random access procedure of embodiments of this disclosure;
FIG. 45 is a schematic diagram of an information reception method of embodiments of this disclosure; and
FIG. 46 is a schematic diagram of an information transmission method of embodiments of this disclosure.

Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "terminal equipment (TE)". The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, a machine to machine (M2M) terminal, and a terminal supporting sidelink communication, etc.

In the embodiments of this disclosure, existing services or services that may be implemented in the future may be performed between a network device and a terminal equipment. For example, such services may include but not limited to an enhanced mobile broadband (eMBB), massive machine type communication (mMTC), ultra-reliable and low-latency communication (URLLC), and vehicle to everything (V2X), etc.

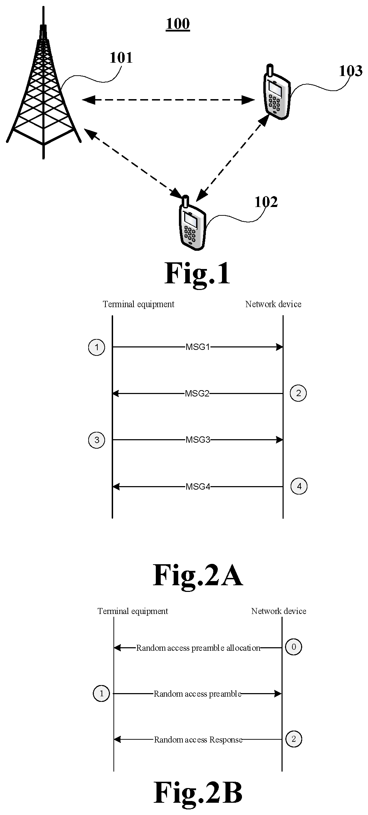

FIG. 1 is a schematic diagram of a communication system of embodiments of this disclosure, in which a case where terminal equipments and a network device are taken as examples is schematically shown. As shown in FIG. 1, the communication system 100 may include a network device 101 and terminal equipments 102, 103. For the sake of simplicity, an example having only two terminal equipments and one network device is schematically given in FIG. 1; however, the embodiments of this disclosure are not limited thereto.

In the embodiments of this disclosure, existing services or services that may be implemented in the future may be performed between the network device 101 and the terminal equipments 102, 103. For example, such services may include but not limited to an enhanced mobile broadband (eMBB), massive machine type communication (mMTC), and ultra-reliable and low-latency communication (URLLC), etc.

The terminal equipment 102 may transmit data to the network device 101, such as in a granted or grant-free transmission manner. The network device 101 may receive data transmitted by one or more terminal equipments 102 and feed back information to the terminal equipment 102, such as acknowledgement (ACK)/non-acknowledgement (NACK) information. According to the feedback information, the terminal equipment 102 may acknowledge end of a transmission process, or may perform new data transmission, or may perform data retransmission.

It should be noted that FIG. 1 shows that two terminal equipments 102, 103 are both in coverage of the network device 101. However, this disclosure is not limited thereto, and the two terminal equipments 102, 103 may not be in coverage of the network device 101, or one terminal equipment 102 is in coverage of the network device 101 and the other terminal equipment 103 is out of coverage of the network device 101.

In the embodiments of this disclosure, higher-layer signaling may be, for example, radio resource control (RRC) signaling; for example, the RRC signaling includes an RRC message, which includes a master information block (MIB), system information, and a dedicated RRC message, or an RRC information element (RRC IE); or an RRC message or an information field included in an RRC information element (or an information field included in information fields). Higher-layer signaling may also be, for example, a medium access control (MAC) signaling, or an MAC control element (MAC CE); however, this disclosure is not limited thereto.

In the embodiments of this disclosure, multiple means "at least two", or "two or more than two".

In the embodiments of this disclosure, "predefined" means defined in a protocol or determined according to a rule defined in a protocol, without needing additional configuration. Configuration/indication (interchangeable in some cases) refer(s) to configuring/indicating directly or indirectly by a network device via higher-layer signaling and/or physical layer signaling. The physical layer signaling refers to, for example, control information (DCI) carried by a physical control channel or control information carried by a sequence; however, it is not limited thereto, and configuration/indication may be performed by introducing higher-layer parameters into higher-layer signaling. For example, information fields (or information fields included in information fields) included in an RRC IE or an RRC message or and RRC information element may also be referred to as higher-layer parameters; however, this disclosure is not limited thereto.

Two RA types, 4-step RA type and 2-step RA type, are defined for a random access procedure in NR. The two RA types include CBRA and CFRA, respectively. In some cases, the 2-step RA type may fall back or switch to the 4-step RA type.

Contention-based random access with 4-step RA type (CBRA with 4-step RA type, or 4-step CBRA) requires at least 4 steps, may also be referred to as 4-step random access (4-step RA or 4-step RACH), the 4-step random access including two times of information exchange between the network device and the terminal equipment. FIG. 2A is a schematic diagram of the 4-step random access procedure. As shown in FIG. 2A, in Msg1 (or MSG1), the terminal equipment transmits a random access preamble, and after transmitting Msg1, it monitors a response (random access response (RAR)) from the network device in a window (e.g. an RAR window). In Msg2 (or MSG2), the network device transmits a random access response, in Msg3 (or MSG3), the terminal equipment transmits an uplink message on an allocated uplink resource (or transmits Msg3 by using an uplink grant(UL grant) scheduled in the random access response), and in Msg4 (or MSG4), the network device feeds back a contention resolution message to a terminal equipment that is successful in access. If the terminal equipment does not receive Msg2 or a corresponding RAR after transmitting Msg 1, or if contention resolution is unsuccessful after transmission or retransmission of Msg3, the UE falls back to transmission of Msg1.

In the embodiments of this disclosure, Msg2 in CBRA may also be referred to as an RAR; however, this disclosure is not limited thereto.

Contention-free random access with 4-step RA type (CFRA with 4-step RA type) requires at least 2 or 3 steps (dependent on whether Msg0 is included), as shown in FIG. 2B. Wherein, in Msg0 (MSG0), the network device allocates dedicated random access preambles and/or PRACH resources to the terminal equipment. In Msg1 (or MSG1), the terminal equipment transmits a random access preamble and monitors a response (a random access response (RAR)) from the network device in a window (e.g. an RAR window) after transmitting Msg1. In Msg2 (or MSG2), the network device transmits a random access response. The terminal equipment ends the random access procedure upon receiving the random access response. At present, in the research of Rel-17, a configuration framework of a feature combination and an additional RACH configuration is introduced to support four features related to random access. A feature combination may include one or more features, and when only one feature is included, it may also be directly referred to as a feature. The above four features include: small data transmission (SDT), network slicing, low capability UE or reduced capability UE (Redcap UE), and Msg3 repetition. For example, a Redcap UE may perform SDT (with a corresponding feature combination including at least RedCap and SDT). A RedCap UE may implement high-priority services to which the slicing corresponds (with a corresponding feature combination including at least RedCap and slicing).

At present, there is no specific solution for how to support PRACH repetition of the 4-step random access, such as how to configure a random access preamble and/or an RO for PRACH repetition, and how to determine transmit power of PRACH transmission of the PRACH repetition.

It is proposed by the inventors that in order to support PRACH repetition, the PRACH repetition may be introduced as a feature into a feature combination. For random access procedures with which different features/feature combinations are associated, in executing the random access procedures, the terminal equipment may transmit PRACH transmission to the network device via random access resources to which the features or feature combinations correspond. In order to enable the network device to distinguish different feature combinations and transmit appropriate/matching response information (such as an RAR) to the terminal equipment, different feature combinations may be configured with different random access preamble sequences and/or ROs. Currently, an additional random access channel configuration list (additional RACH-ConfigList-r1 7) has been added in a configuration of a bandwidth part, the configuration list carrying configuration information for random access preambles of different feature combinations.

However, it was found by the inventors that at least the following problems exist in the random access configuration of the feature combinations.

Problem 1: if the same feature combination may include different repetition numbers of a first message, different repetition numbers of the first message need to be distinguished by preambles and/or PRACH occasions when random access resources for the same feature combination are configured (that is, preambles and/or PRACH occasions to which different repetition numbers of the first message correspond are different (there exists no intersection therebetween)). On the one hand, this enables the network device to detect and receive Msg1 based on different repetition numbers of the first message with a relatively low complexity, and on the other hand, more importantly, this enables the network device to determine a last PRACH occasion to which transmitting Msg1 by the terminal equipment in an RACH attempt corresponds after the network device receives Msg1, and further determine an RA-RNTI and an RAR window according to the PRACH occasion, thereby transmitting an RAR to the terminal equipment. On the contrary, if different repetition numbers are not distinguished by preambles and/or PRACH occasions, the complexity of the network device in detecting and receiving will be higher, and it may not be possible to use a correct RA-RNTI to transmit an RAR to the terminal equipment within an appropriate time range, resulting in failure in random access.

Problem 2: a random access configuration for a feature combination includes ssb-SharedRO-MaskIndex, which indicates ROs of a feature combination for which an ROs configuration is allowed to use in a (SSB to RO) third mapping cycle. In a mapping cycle, different SSBs (indices) are respectively associated with N ROs; where, 1=<N=<8. For the terminal equipment, based on an assumption that the terminal equipment may only have one PRACH transmission in a RACH attempt, as any SSB (index) is associated with the same number of and at least one PRACH occasion in a mapping cycle, the terminal equipment selects any SSB (index) to perform a PRACH transmission for a RACH attempt in any mapping cycle. However, for the case of PRACH repetition, the above method may no longer be applicable. For example, in the case of PRACH repetition, the terminal equipment needs to use multiple ROs in one RACH attempt, and the multiple ROs may need to be across mapping cycles, for example, the repetition number is 4, while an SSB (index) in each (SSB-to-RO) mapping cycle is only associated with one PRACH occasion. For another example, for the PRACH repetitions, a new method for mapping between SSBs (indices) and PRACH occasions may possibly be needed to be introduced, which is unable to be configured by indicating PRACH occasions allowed to be used in one (SSB-to-RO) mapping cycle.

Various embodiments of this disclosure shall be described below with reference to the accompanying drawings. These embodiments are illustrative only, and are not intended to limit this disclosure.

Embodiments of a first aspect

The embodiments of this disclosure provide an information transceiving method, which shall be described from a terminal equipment side.

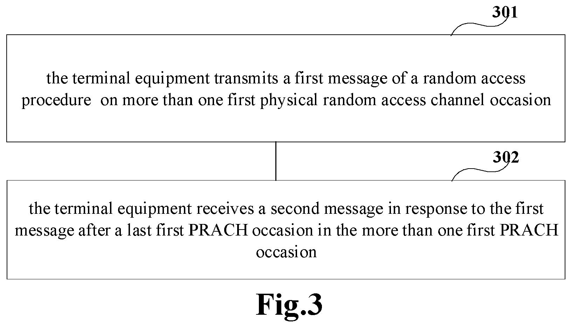

FIG. 3 is a schematic diagram of the information transceiving method of the embodiments of this disclosure. As shown in FIG. 3, the method includes:

> 301: the terminal equipment transmits a first message of a random access procedure on more than one first physical random access channel occasion (PRACH occasion, RO); and
> 302: the terminal equipment receives a second message in response to the first message after a last first PRACH occasion in the more than one first PRACH occasion.

It should be noted that FIG. 3 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 3.

In the following embodiments, PRACH transmission/transmitting may be replaced with PRACH transmission, and a PRACH occasion may be replaced with a PRACH occasion or PRACH transmission occasion or RACH occasion, or an RO or an RACH resource or a time-frequency resource used for transmitting a PRACH. The first message is Msg1, which may be replaced with a PRACH or a preamble or a random access preamble or a preamble sequence, and represent an object transmitted on an RO; a random access attempt (RACH attempt) may be replaced with a preamble attempt or an Msg1 attempt; and the PRACH repetition may be replaced with Msg1 repetition or multiple PRACH transmissions. The second message is Msg2, which is used to carry a random access response (RAR).

In some embodiments, the more than one first RO belong to one RO group and/or belong to a set of random access resources. The last first RO is a last RO in the RO group. The RO group belongs to the set of random access resources. The second RO refers to an RO that (the terminal equipment) may (is able to) transmit the first message (configured by the network device for the terminal equipment). In a RACH attempt, the second RO includes more than one first RO, the first RO refers to an RO that actually transmits the first message, and may further include a RO that does not actually transmit the first message. The set of random access resources shall be described later.

In some embodiments, in order to support repetition of the first message, a feature for the first message repetition number need to be defined. A feature for the first message repetition number includes multiple different first message repetition numbers, or a feature for the first message repetition number includes only of one first message repetition number.

In some embodiments, the feature the first message repetition number, for example, is referred to as a first message repetition, or a first message repetition number.

In some embodiments, a feature is defined for the first message repetition, the feature including all first message repetition numbers (e.g. 2, 4, 8). Or, multiple features are defined for the first message repetition, each feature including one first message repetition number, for example, three features are defined, each including 2, 4, and 8.

In some embodiments, if one feature is defined for the first message repetition, a feature combination including this feature includes multiple/all first message repetition numbers. If multiple features are defined for the first message repetition and different features include a first message repetition number respectively, a feature combination including one of these features includes only one first message repetition number, and a feature combination including multiple of these features includes only multiple first message repetition numbers.

In some embodiments, a feature combination may only include at most one feature for the first message repetition; however, this disclosure is not limited thereto.

In some embodiments, the feature for the first message repetition may be combined with one or more of the above four features and/or other features. For example, the feature for configuring the first message repetition is supplemented in FeatureCombination-r17.

In some embodiments, the set of random access resources is configured by one or more other information in first configuration information (FeatureCombinationPreambles) including first information for configuring a feature combination. In order to support PRACH repetition, the feature combination configured by the first information includes the first message repetition and/or one or more first message repetition numbers, and/or, the one or more first message repetition numbers include a first message repetition number adopted in the random access procedure and/or a random access attempt to which the first message corresponds and/or the first message. When the feature combination configured by the first information includes the first message repetition (msg1-Repetitions), the first message repetition may also be regarded as a feature, and is configured by the first information (featurecombination-r17), for example, the first information includes optional redCap, smallData, nsag, msg3-Repetitions, and newly-added feature-type msg1-Repetitions; and/or, the first information may be used to configure one or more first message repetition numbers.

In some embodiments, the first message repetition number may also be referred to as a PRACH repetition number (or referred to as an Msg1 repetition number, or the number of Msg1 repetitions, or the number of multiple PRACH transmissions), or a repetition number in brief.

For example, it refers to the number of PRACHs or the number of preamble sequences transmitted in an RACH attempt. For another example, the first message repetition number refers to a maximum number of PRACH transmissions or preamble sequence transmissions in/of/corresponding to an RACH attempt, and/or the number of ROs in/of/corresponding to an RACH attempt (e.g. the number of corresponding second ROs), and/or the number of ROs selected for an RACH attempt, and/or the number of ROs included in an RO group selected for an RACH attempt, and/or the number of ROs included in an RO group to which one or more ROs selected for an RACH attempt belong.

For example, the first message repetition number may be 2 or 4 or 8. However, it is not limited thereto, for example, it may also be 16, etc.

In some embodiments, an actual PRACH or preamble sequence transmission number of the terminal equipment in an RACH attempt is less than or equal to the first message repetition number, or the number of first ROs in an RACH attempt is less than or equal to the number of second ROs in the RACH attempt.

In some embodiments, in 301 and 302, the terminal equipment transmits the first message of the random access procedure in more than one first RO in multiple second ROs in an RACH attempt, and receives a second message after a last second RO in the multiple second ROs (the last first RO in the above more than one first RO is the second RO (when the last second RO is a first RO), or before the second RO (when the last second RO is not a first RO)). For example, the terminal equipment attempts to detect DCI format 1_0 (used to schedule a PDSCH carrying an RAR) with corresponding CRC scrambled by a corresponding RA-RNTI in a window (RAR window), the window starting after the last second RO. A starting position of the window is specifically, for example, a first one of symbols of an earliest CORESET configured for the terminal equipment used for receiving PDCCHs for a Type1-PDCCH CSS set, i.e. at least one symbol after a last one of symbols of a last RO (a last second RO) corresponding to a PRACH transmission (or the RACH attempt, or PRACH transmission(s) of the RACH attempt), wherein a symbol duration corresponds to an SCS corresponding to the Type1-PDCCH CSS set (or the PDCCH or an active downlink BWP).

The above corresponding RA-RNTI is also determined according to the last second RO, for example, the corresponding RA-RNTI is an RA-RNTI associated with the last second RO. Specifically, for example, an RA-RNTI associated with a last (valid) RO (the last second RO in the RO group) in an RO group (including multiple above second ROs) for Msg1 repetition is calculated according to a formula as below:

$$\text{RA-RNTI} = 1 + s\_id + 14 \times t\_id + 14 \times 80 \times f\_id + 14 \times 80 \times 8 \times ul\_carrier\_id.$$

Correspondingly, the network device transmits the DCI format 1_0 to the terminal equipment in the above window, thereby transmitting the second message carrying the RAR to the terminal equipment.

In some embodiments, the set of random access resources includes RO groups corresponding to the one or more first message repetition numbers. The number of ROs included in (any) one RO group corresponding to a first message repetition number is equal to the first message repetition number, or the number of ROs included in (any) one RO group in RO group(s) to which the first message repetition number corresponds is greater than or equal to the first message repetition number.

In some embodiments, an MAC layer of the terminal equipment determines a corresponding set of random access resources according to the first configuration information. Applicabilities of the features need to be taken into account, so as to determine availabilities of the random access resources, and select a set of random access resources according to applicable features.

In some embodiments, the first message repetition and/or one or more first message repetition numbers is/are applicable to the random access procedure. The terminal equipment selects one or more sets of random access resources. The one or more sets of random access resources is/are available for the first message repetition and/or the one or more first message repetition numbers (the number of repetitions for Msg1). At least 2 of the multiple sets of random access resources are available for different first message repetition numbers. For one random access attempt and/or one Msg1 transmission, the terminal equipment selects ROs from a set of random access resources available for the first message repetition number used in the random access attempt and/or the Msg1 transmission.

In some embodiments, the terminal equipment determines whether the first message repetition and/or one or more first message repetition numbers is/are applicable to the random access procedure and/or the random access attempt to which the first message corresponds and/or the first message according to at least one of one or more first RSRP thresholds, wherein at least one of the one or more first RSRP thresholds includes a maximum value in the one or more first RSRP thresholds. In addition, the terminal equipment determines a first message repetition number used in a random access procedure and/or a random access attempt and/or an Msg 1 transmission according to at least one of the one or more first RSRP thresholds.

In some embodiments, the terminal equipment needs further to select ROs from the set of random access resources, including selecting the RO group from the set of random access resources or selecting one or more ROs in the RO group from the set of random access resources by the terminal equipment. The one or more ROs include(s) a first one of ROs. The first one of ROs refers to an RO in the RO groups with a smallest first RO index or second RO index or third RO index, and/or a first one of ROs in the time domain, and other ROs are determined according to the first one of ROs and a mapping relationship described later. The first RO index, second RO index and third RO index shall be described later.

For example, the selecting the RO group from the set of random access resources includes: selecting the RO group from the RO group(s) in the set of random access resources corresponding to the random access procedure and/or the random access attempt to which the first message corresponds and/or the first message repetition number.

For example, the selecting one or more ROs in the RO group from the set of random access resources includes selecting one or more ROs in the RO group in the RO group(s) corresponding to the random access procedure and/or the random access attempt to which the first message corresponds and/or the first message repetition number used by the first message.

How to configure the random access resources shall be described below.

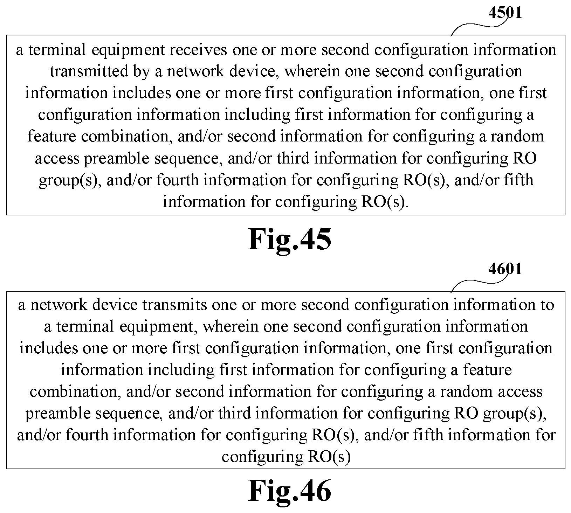

In some embodiments, FIG. 45 is a schematic diagram of the information reception method of the embodiments of this disclosure. As shown in FIG. 45, the method includes: 4501: a terminal equipment receives one or more second configuration information transmitted by a network device, wherein one second configuration information includes one or more first configuration information, one first configuration information including first information for configuring a feature combination, and/or second information for configuring a random access preamble sequence, and/or third information for configuring RO group(s), and/or fourth information for configuring RO(s), and/or fifth information for configuring RO(s). The one or more second configuration information (RACH-ConfigCommon) is/are used to configure/define cell-specific random access parameters. One second configuration information includes one or more first configuration information (used for configuring a feature combination and/or a set of random access resources to which the feature combination correspond). One first configuration information includes first information for configuring a feature combination, and/or second information for configuring a random access preamble sequence, and/or third information for configuring RO group(s), and/or fourth information for configuring RO(s), and/or fifth information (ssb-SharedRO-MaskIndex-r17) for configuring RO(s).

In some embodiments, one first configuration information includes one the first information, the one the first information being used to configure a feature combination. A relationship between the feature combination and the first message repetition number shall be described below.

In some embodiments, for a feature combination, the first message repetition and/or the first message repetition number may be included or not, and/or at most one first message repetition number may be included or at most one first message repetition number (e.g. 2 or 4 or 8) is only supported, or more than one first message repetition number may be included or more than one first message repetition number may be supported. Wherein, when one first message repetition number is supported, in embodiments described later, the random access resources may be configured in a method identical to the method where at most one first message repetition number is only supported. When multiple first message repetition numbers are supported, in the embodiments described later, the random access resources may be configured in a method identical to or different from the method where at most one first message repetition number is only supported. In addition, the network device may configure to include one or more first message repetition numbers for the terminal equipment for a feature combination.

In some embodiments, for a feature combination including multiple first message repetition numbers, two corresponding random access preamble sequences in the multiple first message repetition numbers are identical or different, and/or two corresponding ROs in the multiple first message repetition numbers are identical or different. Wherein, ROs corresponding to two first message repetition numbers to which different random access preamble sequences correspond are identical or different, and ROs corresponding to two first message repetition numbers corresponding to identical random access preamble sequences are different. The term 'identical' refers to presence of intersection or complete identical or partially identical, and the term 'different' refers to absence of intersection or completely different.

In some embodiments, ROs to which one first message repetition number corresponds include RO (s) included in RO group(s) to which the first message repetition number corresponds.

In some embodiments, for a feature combination that includes multiple first message repetition numbers, RO groups to which different first message repetition numbers correspond include identical ROs; or, ROs included in RO groups with smaller first message repetition numbers are a subset of ROs included in RO groups with larger first message repetition numbers; or, the ROs included in the RO groups with larger first message repetition numbers are a subset of the ROs included in the RO groups with smaller first message repetition numbers.

In some embodiments, for a feature combination that includes multiple first message repetition numbers, ROs to which different first message repetition numbers correspond are identical; or, ROs to which smaller first message repetition numbers correspond are a subset of ROs to which larger first message repetition numbers correspond; or, the ROs to which the larger first message repetition numbers correspond are a subset of the ROs to which smaller first message repetition numbers correspond.

How to configure the random access resources (random access preamble sequences or ROs or RO groups) shall be described below with reference to the second information to the fifth information respectively.

In some embodiments, the second information is used to configure a random access preamble sequence to which the feature combination configured by the first information corresponds. For a feature combination including multiple first message repetition numbers, the second information configures corresponding random access preamble sequences respectively for different first message repetition numbers in the feature combination. Therefore, different first message repetition numbers may be distinguished by the random preamble sequences; however, the embodiments of this disclosure are not limited thereto. Or, the first information configures a feature combination with a random access preamble sequence without taking the first message repetition numbers into account.

In some embodiments, the second information includes one or more first information elements (IEs), the first IEs being used to configure a corresponding random access preamble sequence for a first message repetition number; or, the second information includes one or more first information fields, the first information fields being used to configure a corresponding random access preamble sequence for a first message repetition number.

In some embodiments, for a feature combination, no RO group or RO may be configured, and only the random access preamble configured by the second information is used to distinguish single PRACH transmission and multi-PRACH transmission (PRACH repetition transmission), and distinguish different first message repetition numbers in distinguishing PRACH repetition transmission.

In some embodiments, for a feature combination, an RO group or RO may be indicated, which shall be described below in detail.

In some embodiments, the third information is used to configure the RO group(s) to which the feature combination configured by the first information corresponds, hence, different first message repetition numbers may be distinguished via the RO groups; however, the embodiments of this disclosure are not limited thereto. Or, the third information configures a feature combination with RO groups without taking the first message repetition number into account.

In some embodiments, for a feature combination that includes multiple first message repetition numbers, the third information configures corresponding RO groups respectively for different first message repetition numbers in the feature combination. For example, the third information includes one or more second IEs, which are used to configure corresponding RO groups for a first message repetition number; or, the third information includes one or more second information fields, which are used to configure corresponding RO groups for a first message repetition number.

In some embodiments, the third information configures the RO groups based on the first repetition number and/or a first RO group index and/or a second RO group index and/or a first group index and/or a first RO index and/or a second RO index and/or a third RO index and/or a second group index (wherein the first RO group index and/or the second RO group index and/or the first group index and/or the first RO index and/or the second RO index and/or the third RO index and/or the second group index may be sequentially numbered from 0 or 1, respectively), and/or the third information configures the RO groups per time period or per mapping cycle.

In some embodiments, the first repetition number is used to configure RO groups for a feature combination and/or a first message repetition number of a feature combination. The first repetition number is identical to or different from the first message repetition number supported by the feature combination.

In some embodiments, the first repetition number is the first message repetition number included in the feature combination configured by the first information. For a feature combination that includes multiple first message repetition numbers, the third information configures RO groups corresponding to the first message repetition numbers respectively based on the multiple first message repetition numbers. The number of ROs included in (any) one RO group in the RO groups to which one first message repetition number corresponds is equal to the first message repetition number.

In some embodiments, the first repetition number is predefined. For example, the first repetition number is a maximum value in first message repetition numbers configured in (one or more the first configuration information of) the second configuration information, and/or a first message repetition number to which a minimum first RSRP threshold configured by the seventh information corresponds, and/or a first message repetition number to which a first one of first RSRP threshold configured by the seventh information corresponds, and/or a maximum value in the first message repetition numbers included in the feature combination configured by the first information; or is equal to 2 or 4 or 8.

In some embodiments, the first repetition number is configured/indicated (directly) by the sixth information (e.g. carried by BWP-UplinkCommon or RACH-ConfigCommon) used to configure the first repetition number, and the first repetition number indicated by the fourth information may be 2 or 4 or 8, etc.

In some embodiments, the first repetition number is configured/indicated by the seventh information used to configure the first RSRP threshold for the first message repetition, the seventh information being carried by a BWP configuration. The terminal equipment receives the seventh information used to configure one or more first RSRP thresholds. At least one of the first RSRP thresholds is used by the terminal equipment to determine whether the first message repetition and/or the first message repetition number is/are applicable to a random access procedure, and/or at least one of the first RSRP thresholds is used by the terminal equipment to determine a first message repetition number used in a random access attempt or one Msg1 transmission.

In some embodiments, that the third information configures RO groups based on the first repetition number refers to that the third information indicates RO group(s) corresponding to the first repetition number, and the number of ROs included in one RO group in the first RO group(s) is equal to the first repetition number. The number of ROs included in (any) one RO group corresponding to a first repetition number is equal to the first repetition number. The terminal equipment determines RO groups and/or an association between SSBs and RO groups according to the first repetition number and other information in the second configuration information, or according to the first repetition number, other information in the second configuration information and eighth information. Or, the terminal equipment determines RO groups to which one or more first message repetition numbers included in the feature combination configured by the first information correspond(s) according to the RO group(s) corresponding to the first repetition number.

In some embodiments, the first RO group index is used to uniquely identify an RO group within a time period or a mapping cycle. Wherein, the time period is a first time period or a second time period or a third time period or a fourth time period, and the mapping cycle is a first mapping cycle or a second mapping cycle. The above time period and mapping cycle shall be described later. Wherein, the first RO group index represents a sequence number of RO group(s) with which an SSB is associated within the time period or the mapping cycle, or a sequence number of RO group(s) within the time period or the mapping cycle. The number of ROs included in one RO group in the RO group(s) is equal to the first repetition number.

In some embodiments, the second RO group index is used to uniquely identify an RO group within RO groups within a time period or a mapping cycle. Wherein, the time period is a first time period or a second time period or a third time period or a fourth time period, and the mapping cycle is a first mapping cycle or a second mapping cycle. The above time period and mapping cycle shall be descried later. Wherein, the second RO group index represents a sequence number of RO group(s) with which an SSB is associated within the RO group(s), or a sequence number of RO group(s) in the RO group(s). The number of ROs included in one RO group in the RO group(s) is equal to the first repetition number.

In some embodiments, the first group index is used to uniquely identify RO group(s) within a time period or a mapping cycle. Wherein, the time period is a first time period or a second time period or a third time period or a fourth time period, and the mapping cycle is a first mapping cycle or a second mapping cycle. The above time period and mapping cycle shall be descried later. Wherein, the first group index represents a sequence number of RO group(s) with which an SSB is associated in the time period or the mapping cycle, or a sequence number of RO group(s) in the time period or the mapping cycle. The number of ROs included in one RO group in the RO group(s) is equal to the first repetition number. The number of RO groups included in the RO groups is predefined or indicated by the network device. The RO groups included in the RO groups are determined according to the first RO group index.

In some embodiments, the third information includes a first RO group index, and/or a second RO group index, and/or a first group index, and/or a first bitmap, and/or a second bitmap, and/or an RO group mask index, and/or a first RIV value. Wherein, one bit in the first bitmap corresponds to one or more first RO group indices, or corresponds to one or more first group indices, or corresponds to one or more RO groups, or corresponds to one or more RO group(s). One bit in the second bitmap corresponds to one or more second RO group indices, or corresponds to one or more RO groups in RO group(s). The second RO group index and/or the second bitmap and/or the RO group mask index and/or the first RIV value indicate(s) RO groups from RO groups indicated by the first bitmap. The RO group mask index and/or the first RIV value is/are defined according to the first RO group index and/or the second RO group index.

In some embodiments, the third information may also be used to configure corresponding ROs for the feature combination configured by the first information. For a feature combination that includes multiple first message repetition numbers, the third information configures corresponding ROs respectively for different first message repetition numbers in the feature combination. The third information includes one or more second IEs, the one or more second IEs being used to configure a corresponding RO for a first message repetition number; or, the third information includes one or more second information fields, the one or more second information fields being used to configure a corresponding RO for a first message repetition number, and/or, the third information configures ROs per time period or per mapping cycle.

In some embodiments, the first RO index is used to uniquely identify an RO within a time period or a mapping cycle. The time period is a first time period or a second time period or a third time period or a fourth time period or a first associated time period or a first associated pattern time period, and the mapping cycle is a first mapping cycle or a second mapping cycle or a third mapping cycle. The above time period and mapping cycle shall be descried later. The first RO index represents a sequence number of an RO with which an SSB is associated within the time period or the mapping cycle, or a sequence number of an RO within the time period or the mapping cycle.

In some embodiments, the second RO index is used to uniquely identify an RO within an RO group within a time period or a mapping cycle. The time period or the mapping cycle is identical to that of the implementation of the first RO index, and shall not be descried herein any further. The second RO index represents a sequence number of an RO with which an SSB is associated within the RO group, or a sequence number of an RO within the RO group.

In some embodiments, the second group index is used to uniquely identify a group of ROs within a time period or a mapping cycle. The time period or the mapping cycle is identical to that of the implementation of the first RO index, and shall not be descried herein any further. The second group index represents a sequence number of a group of ROs with which an SSB is associated in the time period or the mapping cycle, or a sequence number of a group of ROs in the time period or the mapping cycle. The number of ROs included in the group of ROs is predefined, or is indicated by the network device.

In some embodiments, the terminal equipment may receive eighth information, the eighth information being used to indicate a group of ROs, and the third information indicates an RO group from the group of ROs.

In some embodiments, the third information includes a first RO index, and/or a second RO index, and/or a second group index, and/or a third bitmap, and/or a fourth bitmap, and/or an RO mask index, and/or a second RIV value.

In some embodiments, a bit in the third bitmap corresponds to one or more first RO indices, or corresponds to one or more second group indices, or corresponds to one or more ROs, or corresponds to one or more groups of ROs. A bit in the fourth bitmap corresponds to one or more second RO indices, or corresponds to one or more ROs in a group of ROs. The second RO index and/or the fourth bitmap and/or the RO mask index and/or the second RIV value indicate(s) an RO from the ROs indicated by the third bitmap. The RO mask index and/or the second RIV value is/are defined according to the first RO index and/or the second RO index.

In some embodiments, the third information indicates an RO group by indicating one or more ROs in one RO group in the first RO group set. The terminal equipment determines RO groups corresponding to the first message repetition number and an association between SSBs and RO groups according to the RO (s) indicated by the third information.

How to arrange the ROs and RO group indices shall be described later with reference to the accompanying drawings.

In some embodiments, for a feature combination that includes multiple first message repetition numbers, the fourth information configures ROs respectively for different first message repetition numbers, hence, different first message repetition numbers may be distinguished by the ROs; however, the embodiments of this disclosure are not limited thereto.

In some embodiments, the fourth information may configure ROs based on a first message repetition number (supported by) of a feature combination. For a feature combination that includes multiple first message repetition numbers, the fourth information may configure ROs respectively for different first message repetition numbers, and the terminal equipment determines RO groups and/or a mapping relationship between SSBs and RO groups according to the ROs indicated by the fourth information. The fourth information indicates ROs based on the first RO index and/or the second RO index and/or the third RO index and/or the second group index, or configures ROs per time period or the mapping cycle. Implementations of the first RO index, the second RO index, the third RO index and the second group index are as described above, and shall not be described herein any further.

In some embodiments, the fifth information indicates ROs based on a third RO index. The third RO index represents a sequence number of RO(s) with which an SSB is associated within a third mapping cycle, so as to determine the RO associated with the SSB.

In some embodiments, the third information may not be added, and the fifth information is used to indicate an RO group, and reference may be made to the third information for an indication method, which shall not be repeated herein any further.

In some embodiments, if a feature combination configured by the first information included in first configuration information includes a first message repetition (Msg1 repetition) and/or one or more first message repetition numbers, the fifth information is absent, and/or the third information and/or fourth information is/are optionally present. For first configuration information with an included feature combination configured by the first information that does include a first message repetition (Msg1 repetition) and/or does include a first message repetition number, the third information and/or fourth information is/are absent. For first configuration information with an included feature combination configured by the first information that includes a first message repetition (Msg1 repetition) and/or one or more first message repetition numbers, the third information and/or fourth information is/are optionally present.

How the ROs/RO group indices are arranged and how to determine the mapping relationship or association between SSBs and the RO/RO group shall be described below with reference to the accompanying drawings.

In some embodiments, an SSB may be replaced with an SSB index. For example, an SSB index is used to refer to an SSB(s) that has (have)/correspond(s) to the SSB index. In an SSB transmission period, one SSB index corresponds to one or more SSB(s).

In some embodiments, an SSB may also be replaced with a candidate SSB index. For example, a candidate SSB index is used to refer to SSB(s) that has/have/correspond(s) to a candidate SSB index. In an SSB transmission period, one candidate SSB index corresponds to one SSB. In some embodiments, the terminal equipment needs to determine valid ROs according to a spectrum type and/or an uplink frequency band type and/or a TDD uplink and downlink configuration and/or SSB(s) corresponding to SSB indices (provided by ssb-PositionsInBurst in system information SIB1 or serving cell configuration information ServingCellConfigCommon (indication information)), and other ROs are invalid ROs.

For example, for paired spectrum (also referred to as FDD spectrum) or an SUL (supplementary UL carrier, also referred to as a supplementary uplink band), all ROs are valid. For unpaired spectrum (also referred to as TDD spectrum), if the terminal equipment is not provided with a common TDD uplink and downlink configuration (such as tdd-UL-DL-ConfigurationCommon), one RO (in one PRACH slot) is valid. If the RO is not in the same PRACH slot as an SSB and before the SSB, starts at least Ngap symbols (received by) after a previous SSB, and (only for unlicensed/shared spectrum) if a channel access mode is semi-static, the RO does not overlap with a set of symbols preceding start of a channel occupancy time of a next UE that does not transmit (signals). If the terminal equipment is provided with the above common TDD uplink and downlink configuration, an RO is valid if it is within uplink symbols (configured by the common TDD uplink and downlink configuration), or, if the RO (is not completely within the above uplink symbols and) starts at least Ngap symbols after a previous last downlink symbol and at least Ngap symbols after a previous last (received) SSB, and if the channel access mode is semi-static (only for unlicensed/shared spectrum), the RO does not overlap with a set of symbols preceding start of a channel occupancy time of a next UE that does not transmit (signals). A value of Ngap is related to a subcarrier spacing of a preamble (or an SCS of a PRACH) and/or a preamble format.

In some embodiments, SSB(s) (in an RO determined to be valid) include(s) SSB(s) corresponding to SSB indices provided (by system information SIB1 or ssb-PositionsInBurst (indication information) in the serving cell configuration information ServingCell ConfigCommon).

In some embodiments, an SSB is only associated with a valid RO or is associated with an RO group that only includes a valid RO. For example, the determining a mapping relationship between SSBs and ROs refers to determining a mapping relationship between SSBs and valid ROs, and the determining a mapping relationship between SSBs and RO groups refers to determining a mapping relationship between SSBs and RO groups that only include valid ROs. That is, only valid ROs will be used for the following mapping from SSBs to ROs or RO groups. In some embodiments, the provided SSB indices refer to SSB indices provided by system information SIB1 or ssb-PositionsInBurst (indication information) in the serving cell configuration information ServingCellConfigCommon. For example, the indication information includes one or two bitmaps. For example, when one bitmap is included, one bit therein corresponds to an SSB index. For example, bits in the bitmap correspond one-to-one from MSB to LSB (or vice versa) with SSB indices from small to large (or vice versa). If one of the bits has a value of 1, an SSB index to which the bit corresponds is provided; otherwise, it is not provided. Or, on the contrary, if a value of a bit therein is 0, an SSB index to which the bit corresponds is provided; otherwise, it is not provided.

In some embodiments, the mapping from SSBs to ROs or RO groups may also be referred to as mapping from SSB indices to ROs or RO group. Correspondingly, an RO or RO group with which an SSB is associated may also be referred to as an RO or RO group with which an SSB index is associated, and an SSB with which an RO or RO group is associated may also be referred to as an SSB index of an RO or RO group.

(I) SSB index-RO mapping is performed first, and then RO grouping is performed.

In some embodiments, SSB indices and ROs may be mapped first, and then RO groups may be determined. In this method, the number of SSB indices to which each RO corresponds is set to N, and a value of N is, for example, {1/16, 1/8, 1/4, 1/2, 1, 2, 4, 8}. If N<1, an SSB is associated with 1/N consecutive valid ROs. If N≥1, N SSBs are associated with the same valid RO, and different SSB indices are associated with different preambles. The mapping from SSB indices to ROs follows an order as below: firstly, preamble indices within each RO are arranged in an ascending order, secondly, frequency-division multiplexed ROs are arranged in an ascending order of frequency domain resource indices, thirdly, time-division multiplexed ROs in each PRACH slot are arranged in an ascending order of time domain resource indices, and finally, ROs are arranged in an ascending order of PRACH slot indices. In general, as valid ROs included in a PRACH configuration may possibly be insufficient to complete a time of mapping (unable to form a complete third mapping cycle) and valid ROs in different PRACH configuration periods may possibly be different, mapping patterns will be relatively complex. For the convenience of implementation, following two types of association periods are defined.

An association period from SSB indices to ROs (first association time period/first association period): mapping is performed starting from frame 0 (start of SFN0), a minimum value (selected from 1, 2, 4, 8, 16 wireless frames) in an association period to which a PRACH configuration period in a table below corresponds enabling configured SSB indices and ROs the association period to complete mapping at least once, and if there are still some ROs in mapping that have not been mapped at the end of whole cyclic mapping from SSB indices to ROs, these ROs will not establish a mapping relationship with the SSBs.

| PRACH configuration periods | Association period (number of PRACH configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

An SSB index to RO association pattern period (first pattern time period/first association pattern period): one association pattern period may contain one or more association periods, and mapping patterns from SSB indices to ROs are present repeatedly in different pattern periods, with a largest length of 160ms. ROs that are not mapped by SSB indices after a whole association period will not be used for PRACH transmission.

Mapping from SSBs to ROs shall be described below with reference to the accompanying drawings.

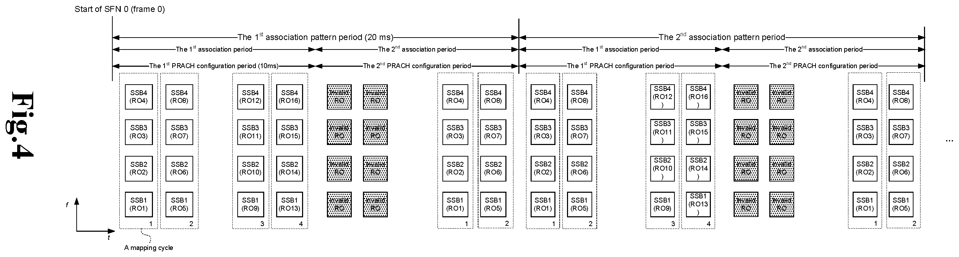

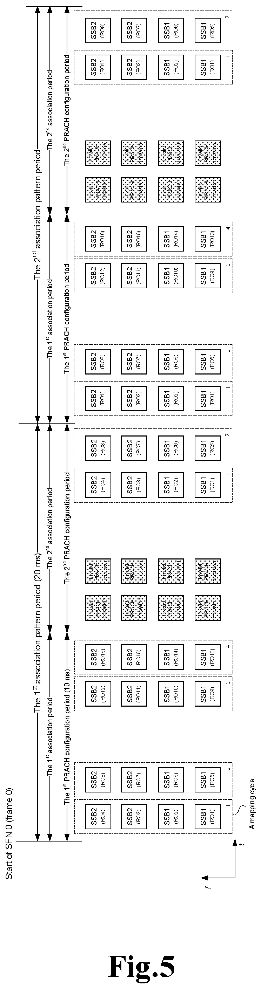

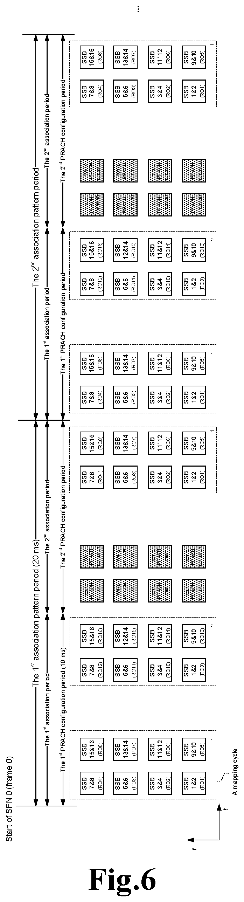

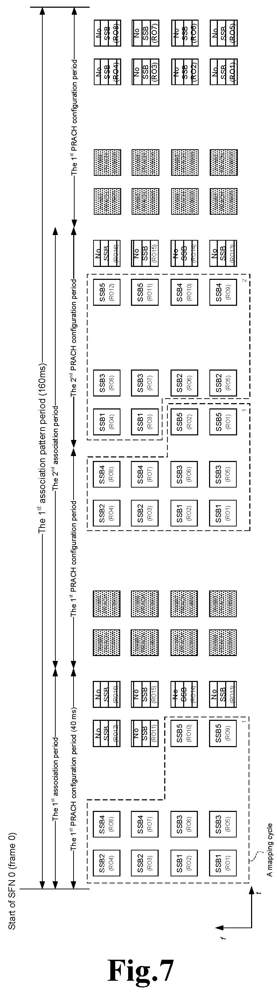

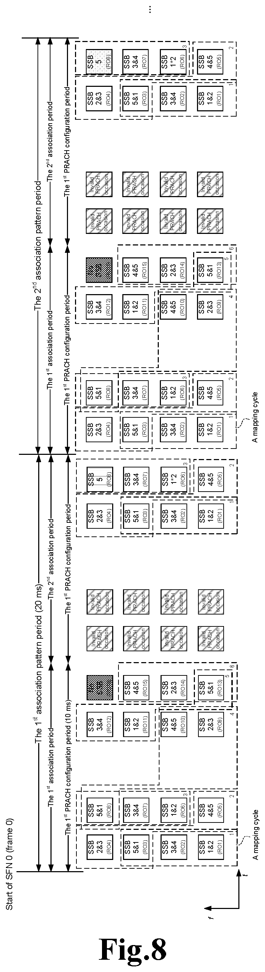

FIGs. 4-8 are schematic diagrams of the mapping from SSB indices to ROs in the embodiments of this disclosure, in which it is assumed that X represents the number of SSB indices provided by system information SIB1 or ssb-PositionsInBurst (indication information) in the serving cell configuration information ServingCellConfigCommon. In FIGs. 4-8, SSBx (x=1~X) in an ascending order of values correspond(s) to SSB indices in an ascending order of values in provided SSB indices. For example, assuming that the provided SSB indices include {0, 2, 4, 8}, SSB1 corresponds to SSB index 0, SSB2 corresponds to SSB index 2, SSB3 corresponds to SSB index 4, and SSB4 corresponds to SSB index 8. Assuming Y represents the number of valid ROs in the PRACH configuration period, ROy (y=1~Y) in an ascending order of values of y correspond(s) to valid ROs in an order of frequency domain first and then time domain in a PRACH configuration period. Assuming Z represents the number of FDMed ROs in a frequency division multiplexing mode, i.e. the number of ROs at the same time domain position, Z is, for example, 1, 2, 4, or 8. In FIG. 4, the PRACH configuration period is 10ms, N=1, X=4, Z=4. In FIG. 5, the PRACH configuration period is 10ms, N=1/2, X=2, Z=4. In FIG. 6, the PRACH configuration period is 10ms, N=2, X=16, Z=4. In FIG. 7, the PRACH configuration period is 40ms, N=1/2, X=5, Z=4. In FIG. 8, the PRACH configuration period is 10ms, N=2, X=4, Z=4. In FIG. 4 to FIG. 8, in a mapping cycle (third mapping cycle), the SSBs correspond to/are associated with $N_2 = \max(\frac{1}{N}, 1)\mathrm{ROs}$, respectively, that is, corresponding to/being associated with 1-8 ROs, respectively. In an association period, assuming that the association period includes P (an integer greater than or equal to 1) mapping cycles, the SSBs correspond to/are associated with $N_2 = P \times \max(\frac{1}{N}, 1)$ ROs. In an association pattern period, assuming that the association pattern period includes Q (an integer greater than or equal to 1) association periods, the SSBs correspond to/are associated with $N_3 = \sum_{q=1}^{Q} P_q \times \max(\frac{1}{N}, 1)$ ROs; where, $P_q$ denotes the number of mapping cycles included in an association periodq.

In some embodiments, after mapping the SSB indices to the ROs, RO grouping is performed. It is assumed that $N_3$ denotes the number of ROs with which an SSB index in an association pattern period is associated (according to the above analysis, $N_3$ is an integer greater than or equal to 1), and a first number R denotes the number (e.g. 2/4/8) of ROs included in an RO group. Taking the case of PRACH repetition into account, as ROs with which one SSB index in a single association pattern period is associated may possibly be insufficient to constitute an RO group, multiple consecutive association pattern periods need to be taken into account in determining RO groups with which SSB indices are associated. Therefore, for the convenience of implementation, a first time period may be defined, which is referred to as an SSB index-to-(RO group) mapping/association period, or an RO group period, or an SSB index-to-(RO group) mapping/association pattern period, or an RO group pattern period, or a time period, etc.; however, this disclosure is not limited thereto.

In some embodiments, it is assumed that the association between SSB indices and RO groups repeats for a first time period starting from a first time position (e.g. frame 0). The first time period includes, for example, an integral number (second number K) of association pattern periods and/or an integral number (third number $G_2$) of first mapping cycles. For example, in the first time period, each/one SSB is associated with at least $G_1$ (e.g. $G_1$=1; however, it is not limited thereto) RO groups and/or is mapped to RO groups at least $G_2$ times. Or, in other words, the first time period includes K association pattern periods that enable each/one SSB to be associated with at least $G_1$ RO groups and/or to be mapped to RO groups at least $G_2$ times.

In some embodiments, the first time period does not exceed a first time length. The first time length, for example, is predefined and/or is indicated by the network device. For example, the first time length is predefined as 160ms or 320ms or 640ms or 1280ms or 160×8ms or is related to the first number, or the network device may select one from {160, 320, 640, 1280}ms as the first time length and indicate it to the terminal equipment.

In some embodiments, the first time period includes K association pattern periods; where, a value of K may be predefined or may be indicated by the network device.

For example, K is indicated by the network device as one of 1, 2, 4, or 8.

For example, K is predefined as:

Example 1: (applicable to Example 1; however, it is not limited thereto)

when $N_3 \geq R$, K = 1;

otherwise (when $N_3 < R$), $K = \lceil R/N_3 \rceil$, or K is a minimum value greater than or equal to $\lceil R/N_3 \rceil$ within a certain range of values. The range of values is, for example, {2,4,8}.

Example 2: (applicable to Example 1; however, it is not limited thereto)

When $\lfloor N_3/R \rfloor \neq 0$, or in other words, $\lfloor N_3/R \rfloor > 0$, K = 1;

otherwise (when $\lfloor N_3/R \rfloor = 0$), $K = \lceil R/N_3 \rceil$, or K is a minimum value greater than or equal to $\lceil R/N_3 \rceil$ within a certain range of values. The range of values is, for example, {2,4,8}.

Example 3: (applicable to Example 2 or 3; however, it is not limited thereto) $N_4$ denotes the number of ROs with the same/identical frequency resource indices (i.e. the same/identical frequency domain positions/frequency domain resources) in an association pattern period.

When $N_4 \geq R$, K = 1;

otherwise (when $N_4 < R$), $K = \lceil R/N_4 \rceil$, or K is a minimum value greater than or equal to $\lceil R/N_4 \rceil$ within a certain range of values. The range of values is, for example, {2,4,8}.

Example 4: (applicable to Example 2 or 3; however, it is not limited thereto) $N_4$ denotes the number of ROs with the same/identical frequency resource indices (i.e. the same/identical frequency domain positions/frequency domain resources) in an association pattern period.

When $\lfloor N_4/R \rfloor \neq 0$, or $\lfloor N_4/R \rfloor > 0$, K = 1;

otherwise (when $\lfloor N_4/R \rfloor = 0$), $K = \lceil R/N_4 \rceil$, or K is a minimum value greater than or equal to $\lceil R/N_4 \rceil$ within a certain range of values. The range of values is, for example, {2,4,8}.

Example 5: (applicable to Example 1 or 2 or 3; however, it is not limited thereto) K = R.

Example 6: (applicable to Example 1; however, it is not limited thereto) K is a minimum value within a certain range of values that enables the SSB indices (in the first time period) to be associated with at least $G_1$ (e.g. T=1; however, it is not limited thereto) RO groups and/or map RO groups for at least $G_2$ times (or at least include $G_2$ first mapping cycles). The range of values is, for example, {2,4,8}; however, it is not limited thereto.

In a single time of mapping (or a single first mapping cycle), an SSB index is associated with $G_3$ RO groups; however, it is not limited thereto.

$G_1$ and/or $G_2$ and/or $G_3$ is/are, for example, pre-defined, or indicated by the network device.

Example 7: (applicable to Example 2; however, it is not limited thereto) K is a minimum value within a certain range of values that enables the SSB indices (at the same frequency position) to be associated with at least $G_1$ (e.g. T=1; however, it is not limited thereto) RO groups and/or map RO groups for at least $G_2$ times (or at least include $G_2$ first mapping cycles). The range of values is, for example, {2,4,8}; however, it is not limited thereto.

In a single time of mapping (or a single first mapping cycle), an SSB index is associated with $G_3$ RO groups; however, it is not limited thereto.

$G_1$ and/or $G_2$ and/or $G_3$ is/are, for example, pre-defined, or indicated by the network device.

Example 8: (applicable to Example 1; however, it is not limited thereto)
K is a smallest integer that enables $\mod(K \times N_3, R) = 0$, or, K is a minimum value within a certain range of values that enables $\mod(K \times N_3, R) = 0$, or, K is a smallest integer that enables $\mod(K \times N_3, R \times G_1) = 0$, or, K is a minimum value within a certain range of values that enables $\mod(K \times N_3, R \times G_1) = 0$, or, K is a smallest integer that enables $\mod(K \times N_3, R \times G_2 \times G_3) = 0$, or, K is a minimum value within a certain range of values that enables $\mod(K \times N_3, R \times G_2 \times G_3) = 0$. The value range is, for example, {2,4,8}; however, it is not limited thereto.

Example 9: (applicable to Example 2; however, it is not limited thereto) K is a smallest integer that enables $\mod(K \times N_4, R) = 0$, or, K is a minimum value within a certain range of values that enables $\mod(K \times N_4, R) = 0$, or, K is a smallest integer that enables $\mod(K \times N_4, R \times G_1) = 0$, or, K is a minimum value within a certain range of values that enables $\mod(K \times N_4, R \times G_1) = 0$, or, K is a smallest integer that enables $\mod(K \times N_4, R \times G_2 \times G_3) = 0$, or, K is a minimum value within a certain range of values that enables $\mod(K \times N_4, R \times G_2 \times G_3) = 0$. The value range is, for example, {2,4,8}; however, it is not limited thereto.

Example 10: it is predefined as a default value, such as 8; however, it is not limited thereto.

How to determine RO groups shall be described below.

In some embodiments, RO groups are determined in the first time period in the order of time domain first and then frequency domain.

Example 1: ROs associated with the same SSB index determine RO groups in the first time period in an order of time domain first and then frequency domain, wherein every first number (R) of ROs belong to the same RO group, that is, in the first time period, for ROs associated with the same SSB index, time-division multiplexed ROs are arranged in an ascending order of time domain resource indices, then, frequency division multiplexed ROs in each PRACH slot are arranged in an ascending order of frequency domain resource indices, and after the above arrangement, every first number (R) of ROs belong to the same RO group. If the remaining ROs after an integral number of RO groups are insufficient to constitute an RO group (that is, the remaining ROs are less than R ROs), the remaining ROs are not used for repeated transmission of Msg1 with a repetition number of R.

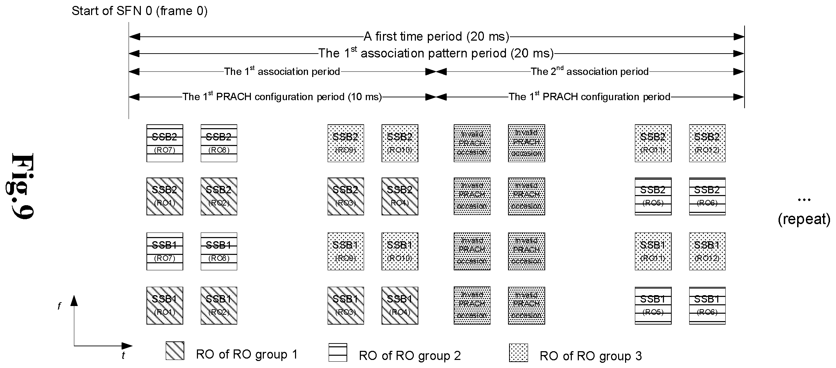

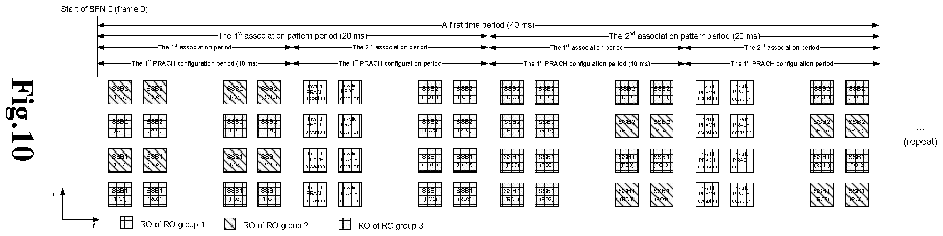

Following description shall be given with reference to FIGs. 9-11. In FIGs. 9 and 10, it is assumed that the mapping from SSB indices to ROs is obtained in the mode shown in FIG. 5. As shown in FIG. 9, assuming that R=4, in the first time period (20ms), RO1, RO2, RO3 and RO4 associated with SSB1 and RO1, RO2, RO3 and RO4 associated with SSB2 are in a group (RO group 1), RO5, RO6, RO7 and RO8 associated with SSB1 and RO5, RO6, RO7 and RO8 associated with SSB2 are in a group (RO group 2), RO9, RO10, RO11 and RO12 associated with SSB1 and RO9, RO10, RO11 and RO12 associated with SSB2 are in a group (RO group 3). As shown in FIG. 10, assuming that R=8, in the first time period (40ms), RO1, RO2, RO3, RO4, RO5 and RO6 associated with SSB1, RO1, RO2, RO3, RO4, RO5, RO6 associated with SSB2 in the first association pattern period and RO1, RO2 associated with SSB1 and RO1, RO2 associated with SSB2 in the second association pattern period are in a group (RO group 1), in the first association pattern period, RO7, RO8, RO9 and RO10 associated with SSB1 and RO7, RO8, RO9 and RO10 associated with SSB2 and RO3, RO4 associated with SSB1 and RO3, RO4 associated with SSB2 in the second association pattern period are in a group (RO group 2), and in the second association pattern period, RO7, RO8, RO9, RO10, RO11 and RO12 associated with SSB1 and RO7, RO8, RO9, RO10, RO11 and RO12 associated with SSB2, RO11 and RO12 associated with SSB1 and RO11 and RO12 associated with SSB2 in the first association pattern period are in a group (RO group 3).

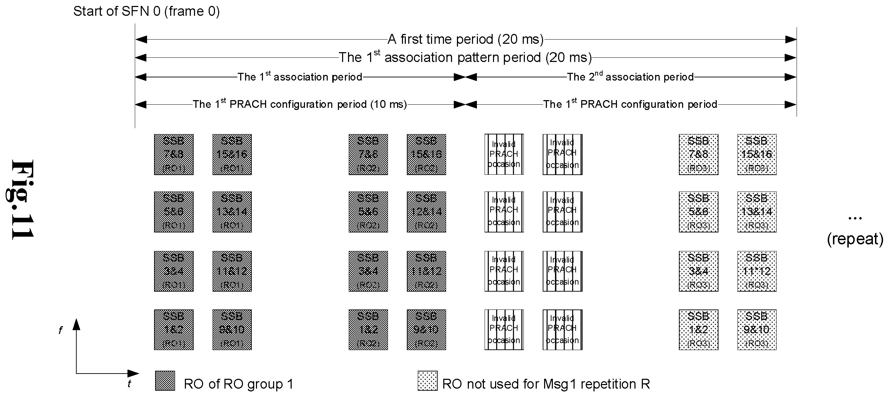

In FIG. 11, assuming that the mapping from SSB indices to ROs is obtained in the mode shown in FIG. 6, as shown in FIG. 11, assuming that R=2, all RO1 and RO2 associated with SSB1-16 are in a group (RO group) in the first time period (20ms).

Example 2: ROs associated with the same SSB index determine RO groups in the first time period in an order of time domain first and then frequency domain, wherein for ROs with the same frequency resource indices, every first number (R) of ROs belong to the same RO group, that is, in the first time period, for ROs associated with the same SSB index, time-division multiplexed ROs are arranged in an ascending order of time domain resource indices, then, frequency division multiplexed ROs in each PRACH slot are arranged in an ascending order of frequency domain resource indices, and after the above arrangement, for ROs with the same frequency resource index (the same frequency position/frequency resource), every R ROs belong to the same RO group. For the ROs with the same frequency resource index, if the remaining ROs (if any) after an integral number of RO groups are insufficient to constitute an RO group (that is, the remaining ROs are less than R ROs), the remaining ROs are not used for repeated transmission of Msg1 with a repetition number of R.

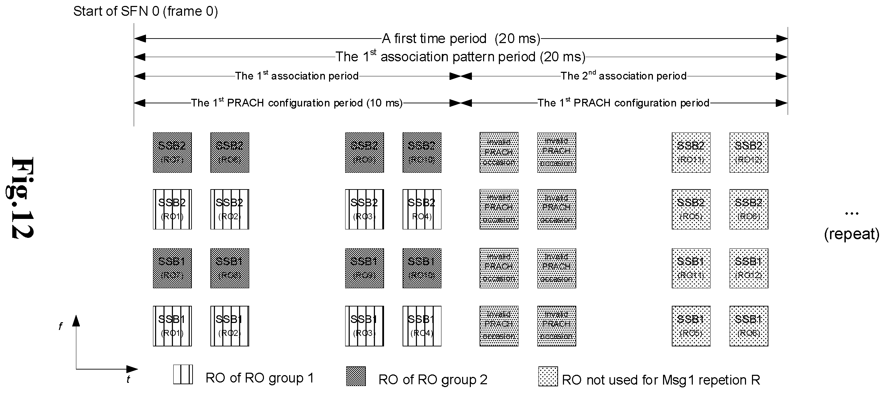

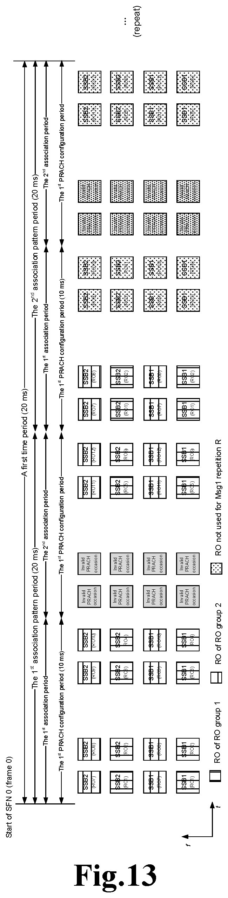

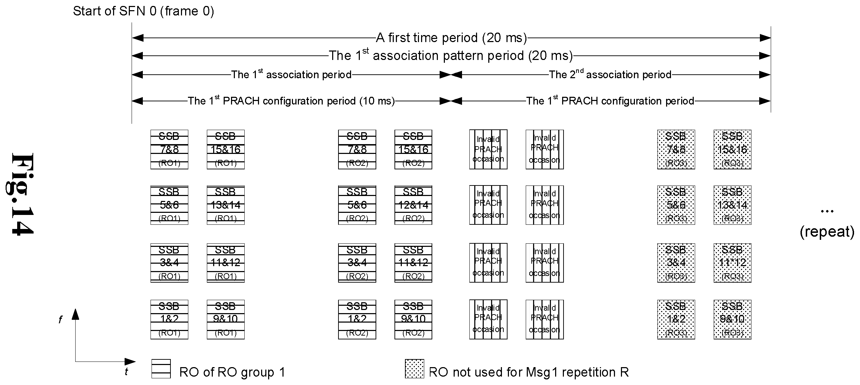

Following description shall be given with reference to FIGs. 12-14. In FIGs. 12 and 14, it is assumed that the mapping from SSB indices to ROs is obtained in the mode shown in FIG. 5. As shown in FIG. 12, assuming that R=4, in the first time period (20ms), RO1, RO2, RO3 and RO4 associated with SSB1 and RO1, RO2, RO3 and RO4 associated with SSB2 are in a group (RO group 1), RO7, RO8, RO9 and RO10 associated with SSB1 and RO7, RO8, RO9 and RO10 associated with SSB2 are in a group (RO group 2). As shown in FIG. 13, assuming that R=8, in the first time period (40ms), RO1, RO2, RO3, RO4, RO5 and RO6 associated with SSB1 and RO1, RO2, RO3, RO4, RO5 and RO6 associated with SSB2 in a first association pattern period and RO1 and RO2 associated with SSB1 and RO1 and RO2 associated with SSB2 in a second association pattern period are in a group (RO group 1), RO7, RO8, RO9, RO10, RO11 and RO12 associated with SSB1 and RO7, RO8, RO9, RO10, RO11 and RO12 associated with SSB2 in the first association pattern period and RO7 and RO8 associated with SSB1 and RO7 and RO8 associated with SSB2 in the second association pattern period are in a group (RO group 2).

In FIG. 14, assuming that the mapping from SSB indices to ROs is obtained in the mode shown in FIG. 6, as shown in FIG. 14, assuming that R=2, all RO1 and RO2 associated with SSB1-16 are in a group (RO group) in the first time period (20ms).

Example 3: in the ROs associated with the same SSB index, RO groups are determined in the first time period in an order of time domain first for the ROs with the same frequency resource index one by one, wherein every first number (R) of ROs belong to the same RO group, that is, for the ROs associated with the same SSB index, the ROs with the same/identical frequency resource index(indices) (i.e. the same/identical frequency domain position(s)/frequency domain resource(s)) are ordered as follows: in the first time period, the time-division multiplexed ROs are arranged in an ascending order of the time domain resource indices, and every R ROs belong to the same RO group. For ROs with the same frequency resource index, if the remaining ROs (if any) after an integral number of RO groups are insufficient to constitute an RO group (i.e. the remaining ROs are less than R ROs), the remaining ROs are not used for repetition transmission of Msg1 with the number of repetitions of R. For other ROs with the same frequency resource index (i.e. the same frequency domain position/frequency domain resource), the above methods are respectively used to group the ROs.

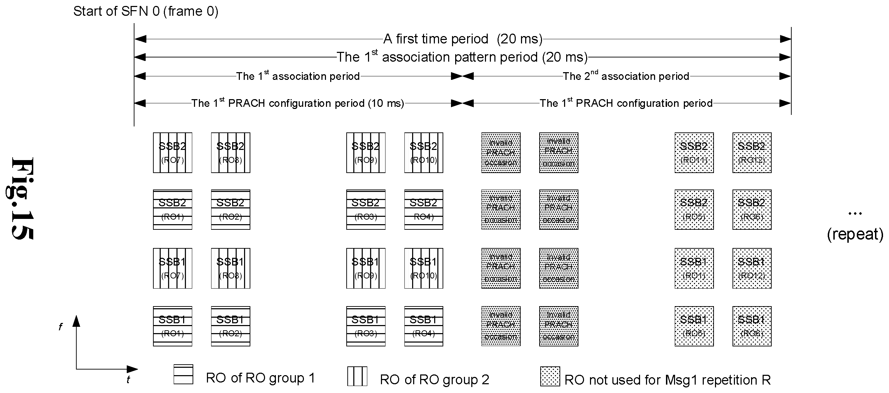

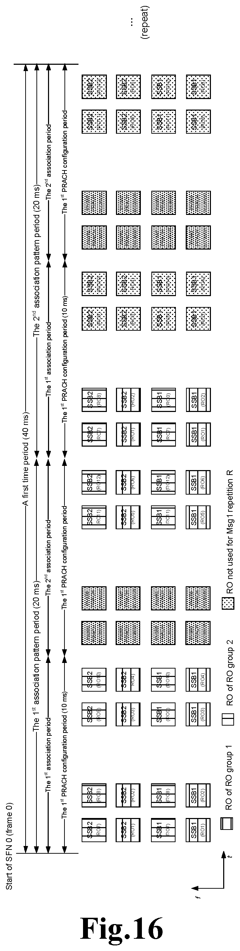

Following description shall be given with reference to FIGs. 15-17. In FIGs. 15 and 16, it is assumed that the mapping from SSB indices to ROs is obtained in the mode shown in FIG. 5. As shown in FIG. 15, assuming that R=4, in the first time period (20ms), RO1, RO2, RO3 and RO4 associated with SSB1 and RO1, RO2, RO3 and RO4 associated with SSB2 are in a group (RO group 1), RO7, RO8, RO9 and RO10 associated with SSB1 and RO7, RO8, RO9 and RO10 associated with SSB2 are in a group (RO group 2). As shown in FIG. 16, assuming that R=8, in the first time period (40ms), RO1, RO2, RO3, RO4, RO5 and RO6 associated with SSB1 and RO1, RO2, RO3, RO4, RO5 and RO6 associated with SSB2 in a first association pattern period and RO1 and RO2 associated with SSB1 and RO1 and RO2 associated with SSB2 in a second association pattern period are in a group (RO group 1), RO7, RO8, RO9, RO10, RO11 and RO12 associated with SSB1 and RO7, RO8, RO9, RO10, RO11 and RO12 associated with SSB2 in the first association pattern period and RO7 and RO8 associated with SSB1 and RO7 and RO8 associated with SSB2 in the second association pattern period are in a group (RO group 2).

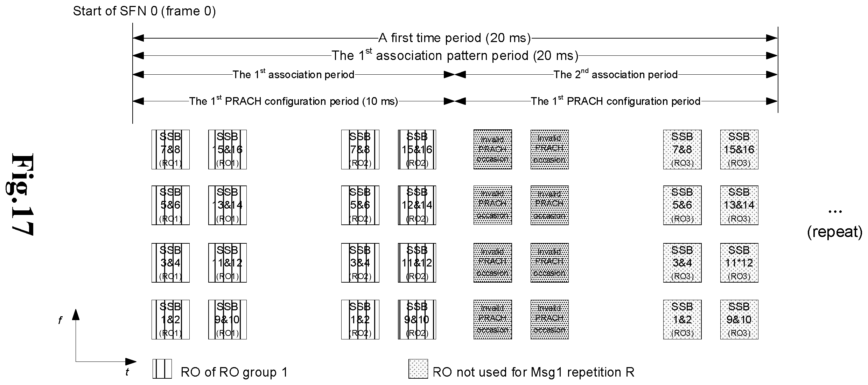

In FIG. 17, assuming that the mapping from SSB indices to ROs is obtained in the mode shown in FIG. 6, as shown in FIG. 17, assuming that R=2, all RO1 and RO2 associated with SSB1-16 are in a group (RO group) in the first time period (20ms).

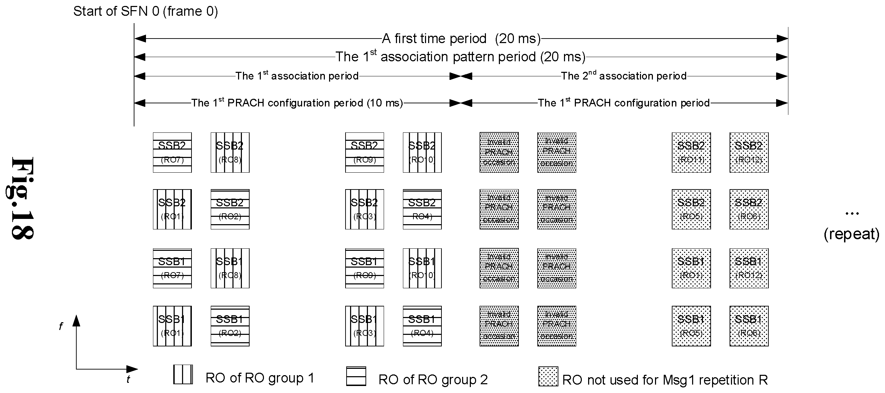

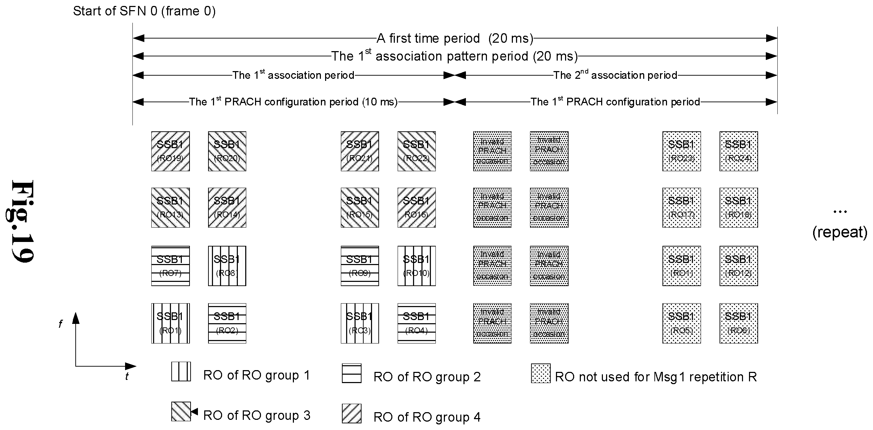

In some embodiments, RO grouping may also be performed in a frequency hopping manner, wherein whether the frequency hopping manner is used may be predefined, or may be configured/indicated by the network device. Frequency hopping is applicable in a case where an SSB index is associated with multiple ROs at the same time domain position and frequency domain positions of the multiple ROs at associated time domain positions are identical (or an SSB index is associated with ROs at identical frequency domain positions and different time domain positions). FIGs. 18-19 are schematic diagrams of performing RO grouping in the frequency hopping manner of the embodiments of this disclosure. In FIGs. 18 and 19, it is assumed that the mapping from SSB indices to ROs is obtained in the mode shown in FIG. 5, and ROs are ordered in the manner in Example 1. Assuming that R=4, as shown in FIG. 18, in the first time period (20ms), RO1, RO3, RO8 and RO10 associated with SSB1 and RO1, RO3, RO8 and RO10 associated with SSB2 are in a group (RO group 1), RO2, RO4, RO7 and RO9 associated with SSB1 and RO2, RO4, RO7 and RO9 associated with SSB2 are in a group (RO group 2). As shown in FIG. 19, assuming that R=4, in the first time period (20ms), RO1, RO3, RO8 and RO10 associated with SSB1 are in a group (RO group 1), RO2, RO4, RO7 and RO9 associated with SSB1 are in a group (RO group 2), RO13, RO15, RO20 and RO22 associated with SSB1 are in a group (RO group 3), and RO14, RO16, RO19 and RO21 associated with SSB1 are in a group (RO group 4).

(II) RO grouping is performed first, and then mapping from SSB indices to RO groups are performed.

In some embodiments, an existing association pattern mapping cycle and association mapping cycle are not used for mapping, but a new time period is defined: it is assumed that the mapping between SSB indices and RO groups (or a set of RO groups) starts from a second time position (e.g. frame 0) and repeats for a second time period. The second time period is referred to as, for example, SSB index-to-(RO group) mapping/association period or SSB index-to-(RO group) mapping association pattern period; however, it is not limited thereto.

In some embodiments, a second time period includes an integral number (fourth number) of second mapping cycles and/or an integral number (fifth number $K_2$) of third time periods and/or an integral number (sixth number) of fourth time periods.

In some embodiments, the second time period does not exceed a second time length, the second time length being predefined and/or being indicated by the network device. For example, the second time length is predefined as 160ms or 320ms or 640ms or 1280ms or 160×8ms or is related to the first number. The first number is related to a second repetition number, and the first message repetition number is identical to or different from the second repetition number. A method for determining the second repetition number is similar to that of the first message repetition number, which shall not be repeated herein any further. Or, the network device may select one from {160, 320, 640, 1280}ms and take it as the second time length to indicate to the terminal equipment.

In some embodiments, RO groups are determined in a third time period, the third time period including an integral number of PRACH configuration cycles. The third time period is referred to as an RO grouping period, or an SSB index-to-(RO group) mapping cycle/association period; however, it is not limited thereto.

In some embodiments, the third time period includes $K_1$ PRACH configuration periods, where a value of $K_1$ is:

for example, K is indicated by the network device as one of 1, 2, 4, 8, 16.
for example, K is predefined as:

example 1 (applicable to Example 1; however, it it not limited thereto): where, $N_5$ denotes the number of ROs in a third time period.

when $N_5 \geq R$, $K_1 = 1$;
otherwise (when $N_5 < R$), $K_1 = \lceil R/N_5 \rceil$, or, $K_1$ is minimum value greater than or equal to $\lceil R/N_5 \rceil$ in a certain range of values. The range of values is, for example, {2,4,8}.

Example 2 (applicable to Example 1; however, it is not limited thereto):

when $\lfloor N_5/R \rfloor \neq 0$ or $\lfloor N_5/R \rfloor > 0$, $K_1 = 1$;
otherwise (when $\lfloor N_5/R \rfloor = 0$), $K_1 = \lceil R/N_5 \rceil$, or $K_1$ is a minimum value greater than or equal to $\lceil R/N_5 \rceil$ in a certain range of values. The range of values is, for example, {2,4,8}.

Example 3 (applicable to Example 2 or 3; however, it is not limited thereto): where, $N_6$ denotes the number of ROs with the same/identical frequency resource indices (i.e. the same/identical frequency domain positions/frequency domain resources) in a third time period.

When $N_6 \geq R$, $K_1 = 1$;
otherwise (when $N_6 < R$), $K_1 = \lceil R/N_6 \rceil$, or $K_1$ is a minimum value greater than or equal to $\lceil R/N_6 \rceil$ in a certain range of values. The range of values is, for example, {2,4,8}.

Example 4 (applicable to Example 2 or 3; however, it is not limited thereto): where, $N_4$ denotes the number of ROs with the same/identical frequency resource indices (i.e. the same/identical frequency domain positions/frequency domain resources) in an association pattern period.

When $\lfloor N_6/R \rfloor \neq 0$ or $\lfloor N_6/R \rfloor > 0$, $K_1 = 1$;
otherwise (when $\lfloor N_6/R \rfloor = 0$), $K_1 = \lceil R/N_6 \rceil$, or $K_1$ is a minimum value greater than or equal to $\lceil R/N_6 \rceil$ in a certain range of values. The range of values is, for example, {2,4,8}.

Example 5 (applicable to Example 1or 2 or 3; however, it is not limited thereto):
$K_1 = R$.
Example 6 (applicable to Example 1; however, it is not limited thereto):

$K_1$ is a minimum value within a certain range of values that may enable the SSB indices to be at least associated with $T_1$ RO groups (in the first time period) and/or map RO groups for at least $T_2$ times (or at least include $T_2$ second mapping cycles). The range of values is, for example, {1,2,4,8,16}. The range of values is related to the PRACH configuration period, for example, different periods correspond to different ranges of values; however, it is not limited thereto.

In a single time of mapping (or a single second mapping cycle), an SSB index is associated with $T_3$ RO groups; however, it is not limited thereto.

$T_1$ and/or $T_2$ and/or $T_3$, for example, is/are predefined, or is/are indicated by the network device.

Example 7 (applicable to Example 2; however, it is not limited thereto):

$K_1$ is a minimum value within a certain range of values that may enable the SSB indices to be at least associated with $T_1$ RO groups (at the same frequency position) and/or map RO groups for at least $T_2$ times (or at least include $T_2$ second mapping cycles). The range of values is, for example, {1,2,4,8,16}. The range of values is related to the PRACH configuration period, for example, different periods correspond to different ranges of values; however, it is not limited thereto.

In a single time of mapping (or a single second mapping cycle), an SSB index is associated with $T_3$ RO groups; however, it is not limited thereto.

$T_1$ and/or $T_2$ and/or $T_3$, for example, is/are predefined, or is/are indicated by the network device.

Example 8 (applicable to Example 1; however, it is not limited thereto):
$K_1$ is a smallest integer that enables $\mathrm{mod}(K_1 \times N_5, R) = 0$, or, $K_1$ is a minimum value within a certain range of values that enables $\mathrm{mod}(K_1 \times N_5, R) = 0$, or, $K_1$ is a smallest integer that enables $\mathrm{mod}(K_1 \times N_5, R \times T_1) = 0$, or, $K_1$ is a minimum value within a certain range of values that enables $\mathrm{mod}(K_1 \times N_5, R \times T_1) = 0$, or, $K_1$ is a smallest integer that enables $\mathrm{mod}(K_1 \times N_5, R \times T_2 \times T_3) = 0$, or, $K_1$ is a minimum value within a certain range of values that enables $\mathrm{mod}(K_1 \times N_5, R \times T_2 \times T_3) = 0$. The value range is, for example, {1,2,4,8,16}. The range of values is related to the PRACH configuration period, for example, different periods correspond to different ranges of values; however, it is not limited thereto.

Example 9 (applicable to Example 2; however, it is not limited thereto):
$K_1$ is a smallest integer that enables $\mathrm{mod}(K_1 \times N_4, R) = 0$, or, $K_1$ is a minimum value within a certain range of values that enables $\mathrm{mod}(K_1 \times N_4, R) = 0$, or, $K$ is a smallest integer that enables $\mathrm{mod}(K_1 \times N_4, R \times T) = 0$, or, $K_1$ is a minimum value within a certain range of values that enables $\mathrm{mod}(K_1 \times N_4, R \times T) = 0$. The value range is, for example, {1,2,4,8,16}. The range of values is related to the PRACH configuration period, for example, different periods correspond to different ranges of values; however, it is not limited thereto.

Example 10: it is predefined as a default value, such as 8; however, it is not limited thereto.

How to determine RO groups and/or the mapping/association relationship between SSB indices and RO groups in the third time period shall be introduced below.

In some embodiments, the RO groups are determined in the third time period in an order of time domain first and then frequency domain.

Example 1: RO groups are determined from ROs in the third time period which are arranged in an order of time domain first and then frequency domain in the second time period, wherein every first number (R) of ROs belong to the same RO group, that is, ROs in the third time period arrange time-division multiplexed ROs in an ascending order of time domain resource indices in the first time period, then, arrange frequency division multiplexed ROs in each PRACH slot in an ascending order of frequency domain resource indices, and after the above arrangement, every first number (R) of ROs belong to the same RO group. If the remaining ROs after an integral number of RO groups are insufficient to constitute an RO group (that is, the remaining ROs are less than R ROs), the remaining ROs are not used for repetition transmission of Msg1 with a repetition number of R.

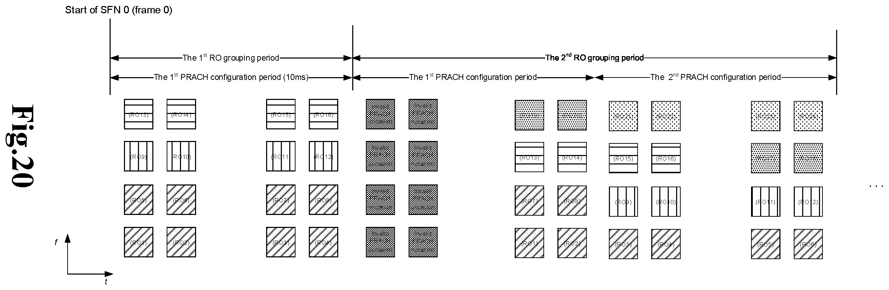

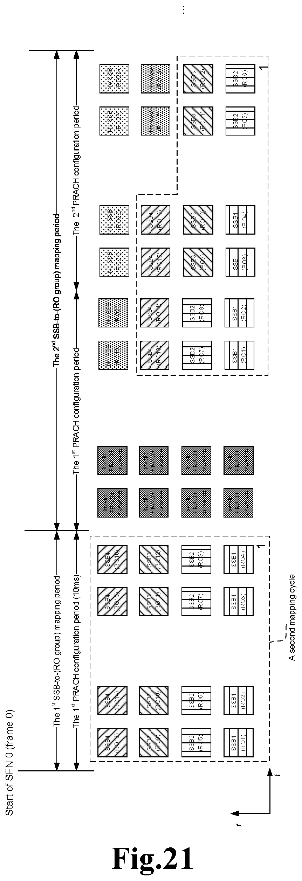

Following description shall be given with reference to FIGs. 20-21. In FIG. 20(not taking mapping with the SSB indices into account), assuming that R=4, RO1, RO2, RO3 and RO4 in a first RO grouping period and RO1, RO2, RO3 and RO4 in a second RO grouping period are in a group (RO group 1), RO5, RO6, RO7 and RO8 in the first RO grouping period and RO7, RO8, RO5 and RO6 in the second RO grouping period are in a group (RO group 2), RO9, RO10, RO11 and RO12 in the first RO grouping period and RO9, RO10, RO11 and RO12 in the second RO grouping period are in a group (RO group 3), RO13, RO14, RO15 and RO16 in the first RO grouping period and RO13, RO14, RO15 and RO16 in the second RO grouping period are in a group (RO group 4), RO17, RO18, RO19 and RO20 in the second RO grouping period are in a group (RO group 5), and RO21, RO22, RO23 and RO24 in the second RO grouping period are in a group (RO group 6). As shown in FIG. 21 (taking mapping with the SSB indices into account), R=4, X=4, and a third time period includes an integral number ($T_2$) of second mapping cycles. $T_3$ = 1 (an RO group in a second mapping cycle). In a third time period, RO groups not associated with SSB indices after an integral number of second mapping cycles are not used for repetition transmission of Msg1 with a repetition number of R. RO1~RO16 within the first/second RO grouping period constitute a second mapping cycle, wherein RO1~RO4 are associated with SSB1, RO5~RO8 are associated with SSB2, RO9~RO12 are associated with SSB3, and RO13~RO16 are associated with SSB4.

Example 2: RO groups are determined from ROs in the third time period which are arranged in the second time period in an order of time domain first and then frequency domain, wherein for ROs with the same frequency resource index, every first number (R) of ROs belong to the same RO group, that is, ROs in the third time period arrange time-division multiplexed ROs in an ascending order of time domain resource indices, then, arrange frequency division multiplexed ROs in each PRACH slot in an ascending order of frequency domain resource indices, and after the above arrangement, for the ROs with the same frequency resource index (i.e. the same frequency domain position/frequency resource), every R ROs belong to the same RO group. For the ROs with the same frequency resource index, if the remaining ROs (if any) after an integral number of RO groups are insufficient to constitute an RO group (that is, the remaining ROs are less than R ROs), the remaining ROs are not used for repetition transmission of Msg1 with a repetition number of R.

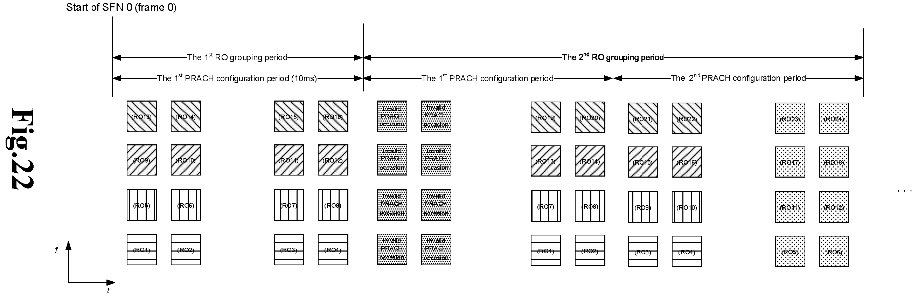

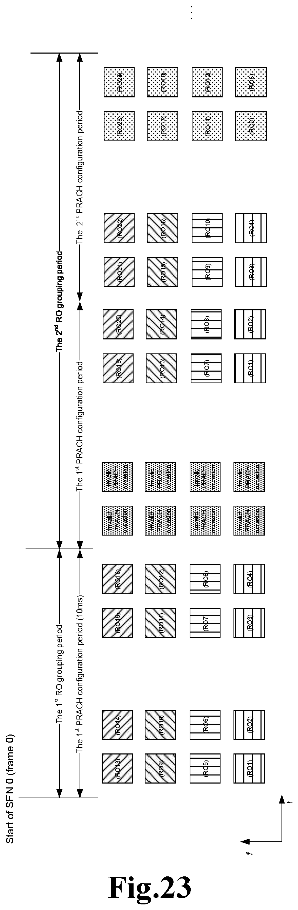

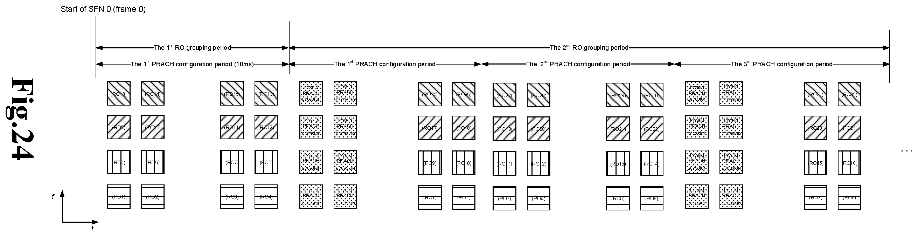

Following description shall be given with reference to FIGs. 22-26. In FIGs. 22-24 (not taking mapping with SSB indices into account), assuming that R=4, as shown in FIGs. 22-23, RO1, RO2, RO3 and RO4 in a first RO grouping period and RO1, RO2, RO3 and RO4 in a second RO grouping period are in a group (RO group 1), RO5, RO6, RO7 and RO8 in the first RO grouping period and RO7, RO8, RO9 and RO10 in the second RO grouping period are in a group (RO group 2), RO9, RO10, RO11 and RO12 in the first RO grouping period and RO13, RO14, RO15 and RO16 in the second RO grouping period are in a group (RO group 3), RO13, RO14, RO15 and RO16 in the first RO grouping period and RO19, RO20, RO21 and RO22 in the second RO grouping period are in a group (RO group 4). As shown in FIG. 24, RO1, RO2, RO3 and RO4 in a first RO grouping period and RO1, RO2, RO3, RO4, RO5, RO6, RO7 and RO8 in a second RO grouping period are in a group (RO group 1), RO5, RO6, RO7 and RO8 in the first RO grouping period and RO9, RO10, RO11, RO12, RO13, RO14, RO15 and RO16 in the second RO grouping period are in a group (RO group 2), RO9, RO10, RO11 and RO12 in the first RO grouping period and RO17, RO18, RO19, RO20, RO21, RO22, RO23 and RO24 in the second RO grouping period are in a group (RO group 3), and RO13, RO14, RO15 and RO16 in the first RO grouping period and RO25, RO26, RO27, RO28, RO29, RO30, RO31 and RO32 in the second RO grouping period are in a group (RO group 4).

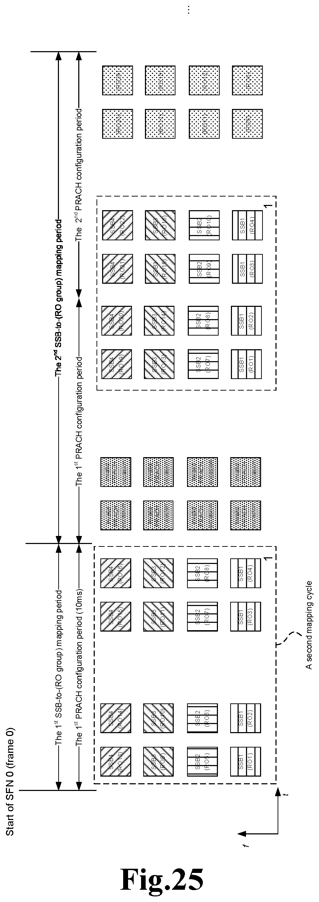

As shown in FIG. 25 (taking mapping with the SSB indices into account), R=4, X=4, and a third time period includes an integral number ($T_2$) of second mapping cycles. $T_3$ = 1 (an RO group). In a first SSB index-RO group mapping cycle, RO1~RO16 constitute a second mapping cycle, wherein RO1~RO4 are associated with SSB1, RO5~RO8 are associated with SSB2, RO9~RO12 are associated with SSB3, and RO13~RO16 are associated with SSB4. In a second SSB index-RO group mapping cycle, RO1~RO16 constitute a second mapping cycle, wherein RO1~RO4 are associated with SSB1, RO7~RO10 are associated with SSB2, RO13~RO16 are associated with SSB3, RO19~RO22 are associated with SSB4, and RO1~RO4, RO7~RO10, RO13~RO16 and RO19~RO22 constitute a second mapping cycle.

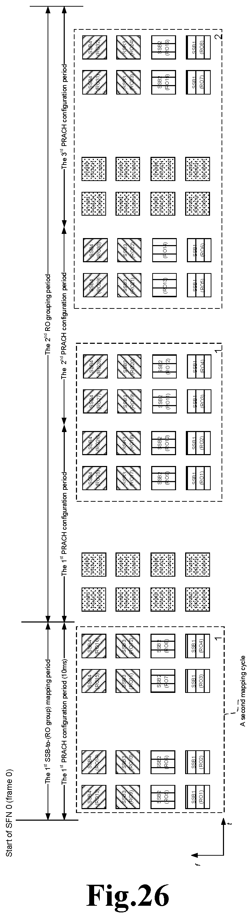

As shown in FIG. 26 (taking mapping with the SSB indices into account), R=4, X=4, and a third time period includes an integral number ($T_2$) of second mapping cycles. $T_3$ = 1 (an RO group). In a first SSB-RO group mapping cycle, RO1~RO16 constitute a second mapping cycle, wherein RO1~RO4 are associated with SSB1, RO5~RO8 are associated with SSB2, RO9~RO12 are associated with SSB3, and RO13~RO16 are associated with SSB4. In a second SSB-RO group mapping cycle, RO1~RO4 (associated with SSB1), RO9~RO12 (associated with SSB2), RO17~RO20 (associated with SSB3) and RO25~RO28 (associated with SSB4) constitute a second mapping cycle. RO6~RO8 (associated with SSB1), RO13~RO16 (associated with SSB2), RO21~RO24 (associated with SSB3) and RO29~RO32 (associated with SSB4) constitute a second mapping cycle.

Example 3: in the ROs in the third time period, RO groups are determined in the second time period in an order of time domain first for the ROs with the same frequency resource index one by one, wherein every first number (R) of ROs belong to the same RO group, that is, for the ROs in the third time period, the ROs with the same/identical frequency resource index(indices) (i.e. the same/identical frequency domain position(s)/frequency domain resource(s)) are ordered as follows: in the second time period, the time-division multiplexed ROs are arranged in an ascending order of the time domain resource indices, and every R ROs belong to the same RO group. For ROs with the same frequency resource index, if the remaining ROs (if any) after an integral number of RO groups are insufficient to constitute an RO group (i.e. the remaining ROs are less than R ROs), the remaining ROs are not used for repetition transmission of Msg1 with a repetition number of R. For other ROs with the same frequency resource index (i.e. the same frequency domain position/frequency domain resource), the above methods are respectively used to group the ROs.

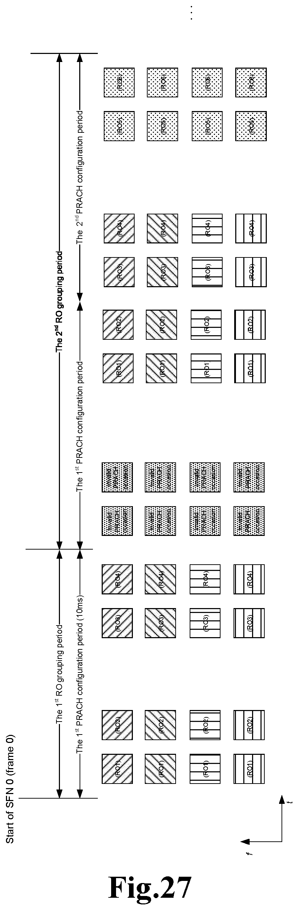

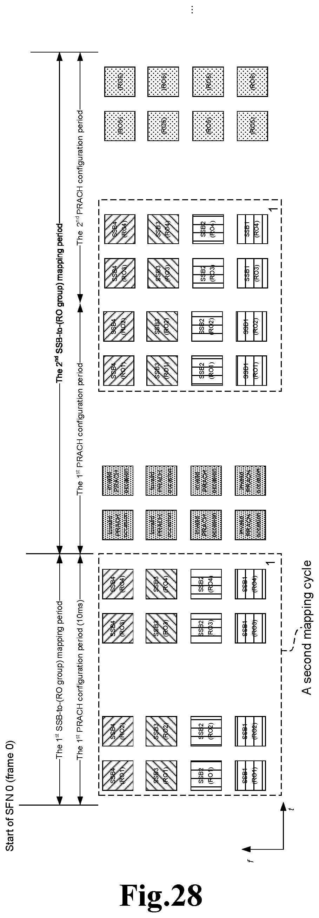

Following description shall be given with reference to FIGs. 27-28. In FIG. 27 (not taking mapping with SSB indices into account), assuming that R=4, for the same frequency position, RO1, RO2, RO3 and RO4 in a first RO grouping period and RO1, RO2, RO3 and RO4 in a second RO grouping period are in a group (RO group 1). As shown in FIG. 28 (taking mapping with the SSB indices into account), R=4, X=4, and a third time period includes an integral number ($T_2$) of second mapping cycles. $T_3$ = 1 (an RO group). In an SSB index-RO group mapping cycle, the same frequency domain position is associated with identical SSB index.

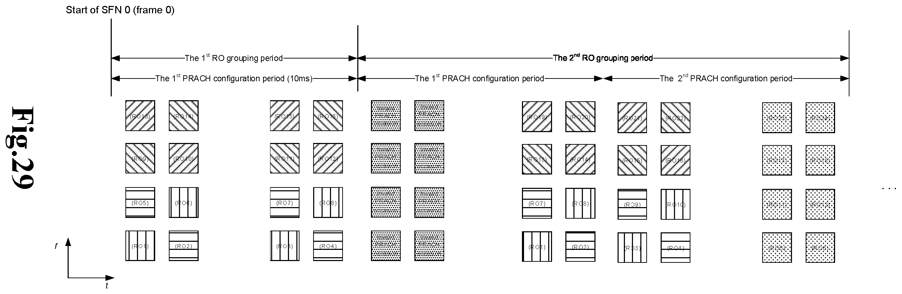

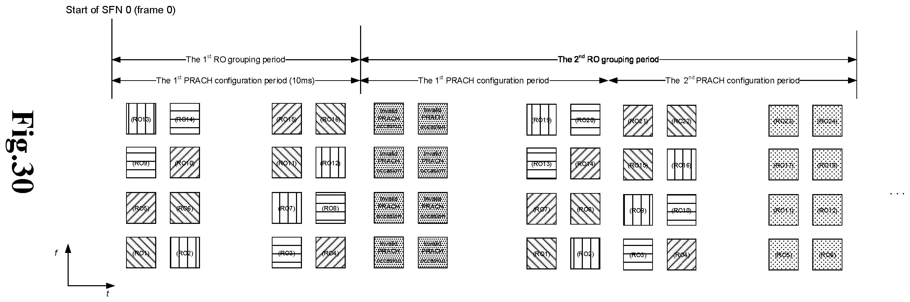

In some embodiments, RO grouping may also be performed in a frequency hopping manner, wherein whether the frequency hopping manner is used may be predefined, or may be configured/indicated by the network device. FIGs. 29-34 are schematic diagrams of performing RO grouping in the frequency hopping manner in the embodiments of this disclosure. In FIGs. 29 and 30 (not taking mapping with SSB indices into account), it is assumed that ROs are ordered in the manner in Example 1 and R=4, as shown in FIG. 29, RO1, RO3, RO6 and RO8 in a first RO grouping period and RO1, RO3, RO8 and RO10 in a second RO grouping period are in a group (RO group 1), RO2, RO4, RO5 and RO7 in the first RO grouping period and RO2, RO4, RO7 and RO9 in the second RO grouping period are in a group (RO group 2), RO9, RO11, RO14 and RO16 in the first RO grouping period and RO13, RO15, RO20 and RO22 in the second RO grouping period are in a group (RO group 3), RO10, RO12, RO13 and RO15 in the first RO grouping period and RO14, RO16, RO19 and RO21 in the second RO grouping period are in a group (RO group 4). As shown in FIG. 30, RO1, RO6, RO11 and RO16 in a first RO grouping period and RO1, RO6, RO15 and RO22 in a second RO grouping period are in a group (RO group 1), RO2, RO7, RO12 and RO13 in the first RO grouping period and RO2, RO9, RO16 and RO19 in the second RO grouping period are in a group (RO group 2), RO3, RO6, RO9 and RO14 in the first RO grouping period and RO3, RO10, RO13 and RO20 in the second RO grouping period are in a group (RO group 3), and RO4, RO5, RO10 and RO15 in the first RO grouping period and RO4, RO7, RO14 and RO21 in the second RO grouping period are in a group (RO group 4).

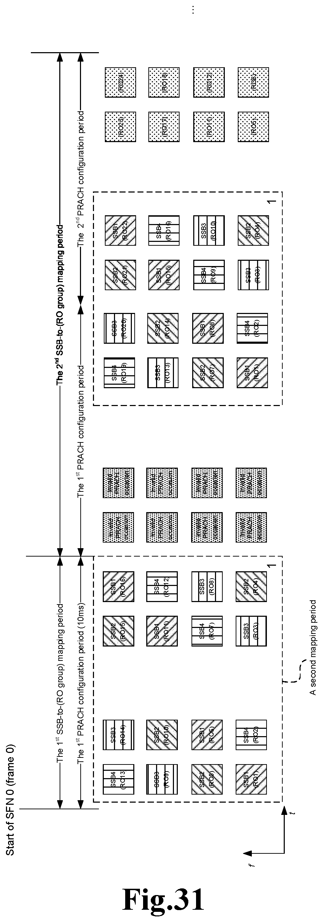

In FIG. 31 (taking mapping with the SSB indices into account), as shown in FIG. 31, it is assumed that R=4, X=4, and a third time period includes an integral number ($T_2$) of second mapping cycles. $T_3$ = 1 (an RO group). In an RO grouping period, RO1, RO6, RO11 and RO16 are associated with SSB1, RO2, RO7, RO12 and RO13 are associated with SSB2, RO3, RO6, RO9 and RO14 are associated with SSB3, RO4, RO5, RO10 and RO15 are associated with SSB4, and RO1~RO16 are associated with a second mapping cycle. In a second RO grouping period, RO1, RO8, RO15 and RO22 are associated with SSB1, RO2, RO9, RO16 and RO19 are associated with SSB2, RO3, RO10, RO13 and RO20 are associated with SSB3, RO4, RO7, RO14 and RO21 are associated with SSB4, and the above ROs are associated with a second mapping cycle.

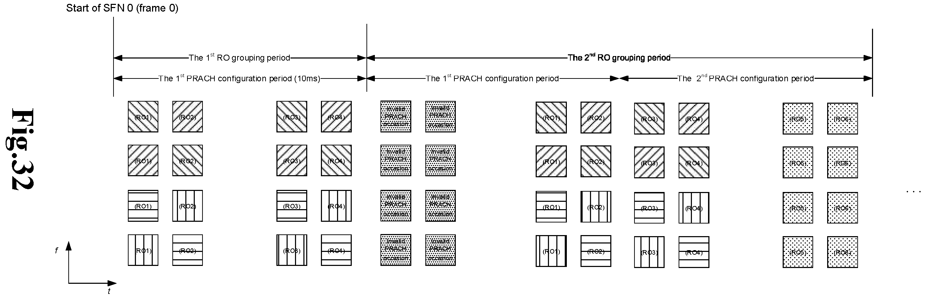

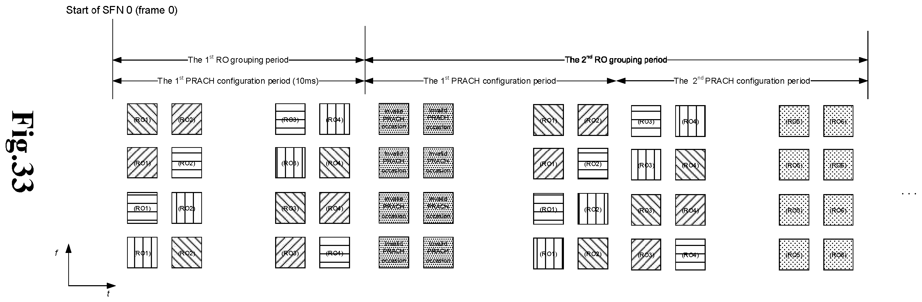

In FIGs. 32 and 33 (not taking mapping with SSB indices into account), it is assumed that ROs are ordered in the manner in Example 2 and R=4, as shown in FIG. 32, RO groups in a first/second RO grouping periods respectively include RO1~RO4 in partially identical frequency domains and time domains. As shown in FIG. 33, RO groups in the first/second RO grouping periods respectively include RO1~RO4 in different frequency domains and time domains.

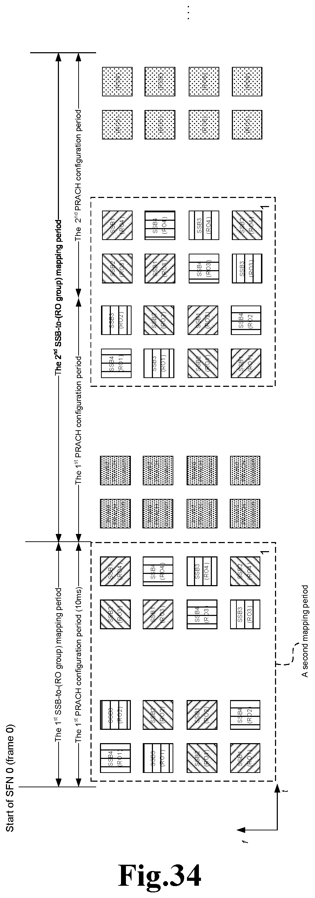

In FIG. 34 (taking mapping with the SSB indices into account), as shown in FIG. 34, it is assumed that R=4, X=4, and a third time period includes an integral number ($T_2$) of second mapping cycles. $T_3$ = 1 (an RO group). SSB indices of ROs associated with the same RO group are identical, and all RO1~RO4 in an SSB index-RO group mapping cycle constitute a second mapping cycle.

In some embodiments, after the RO grouping is completed, mapping from SSB indices to RO groups is performed.

For example, the second time period includes an integral number of fourth time periods, the fourth time periods including an integral number of third time periods. Wherein, the third time periods are determined in the manner described above where no mapping between SSB indices and ROs or RO groups is taken into account, and the third time periods include an integral number of RO groups. A fourth time period includes an integral number of second mapping cycles. Wherein, in a fourth time period, ROs or RO groups that are not associated with SSB indices after an integral number of second mapping cycles are not used for repetition transmission of Msg1 with a repetition number of R. In a second time period, if ROs after an integral number of fourth time periods are insufficient to constitute an RO group (i.e. the remaining ROs are less than R ROs) or if ROs or RO groups after an integral number of fourth time periods are not associated with SSB indices, the remaining ROs or RO groups are not used for repetition transmission of Msg1 with a repetition number of R. That is, the ROs or RO groups that are not associated with SSB indices after an integral number of fourth time periods are not used for repetition transmission of Msg1 with a repetition number of R.

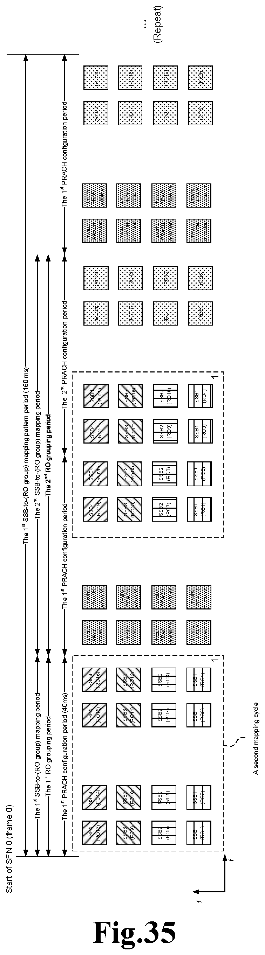

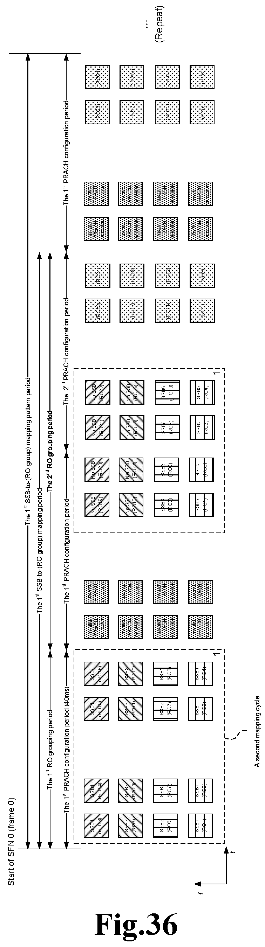

FIGs. 35 and 36 are schematic diagrams of mapping relationships. As shown in FIG. 35, R=4, $T_3$=1 (the SSB indices are respectively associated with one RO group in a second mapping cycle), and X=4. Assuming that a second time length of the second time period is 160 ms, as shown in FIG. 36, R=4, $T_3$=1 (the SSB indices are respectively associated with one RO group in a second mapping cycle), and X=6. It is assumed that a second time length of the second time period is 160 ms.

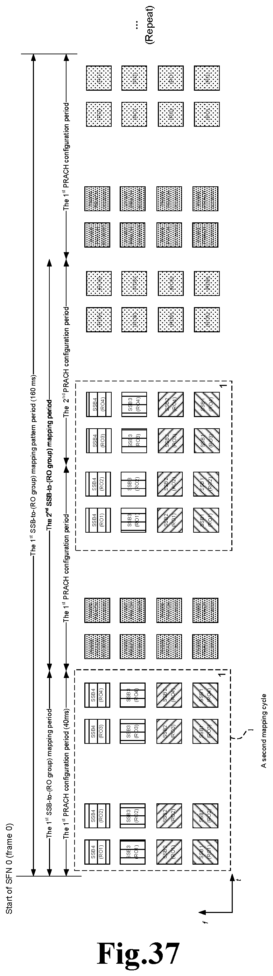

For example, the second time period includes an integral number ($K_2$) of third time periods, wherein a third time period includes an integral number ($T_2$) of second mapping cycles, or, in other words, an integral number of times of mapping between SSB indices and RO groups. Numbers of RO groups and/or numbers of second mapping cycles included in different third time periods in the second time period are identical or different. Wherein, in a second time period, ROs after an integral number of third time periods are insufficient to constitute an RO group (that is, the number of remaining ROs is less than R) or if ROs or RO groups after an integral number of third time periods are not associated with SSBs, the remaining ROs or RO groups are not used for repetition transmission of Msg1 with a repetition number of R. That is, the ROs or RO groups that are not associated with SSB indices after an integral number of third time periods are not used for repetition transmission of Msg1 with a repetition number of R. FIG. 37 is a schematic diagram of the mapping relationship. As shown in FIG. 37, R=4, $T_3$=1 (the SSBs are respectively associated with one RO group in a second mapping cycle), and X=4. It is assumed that a second time length of the second time period is 160 ms.

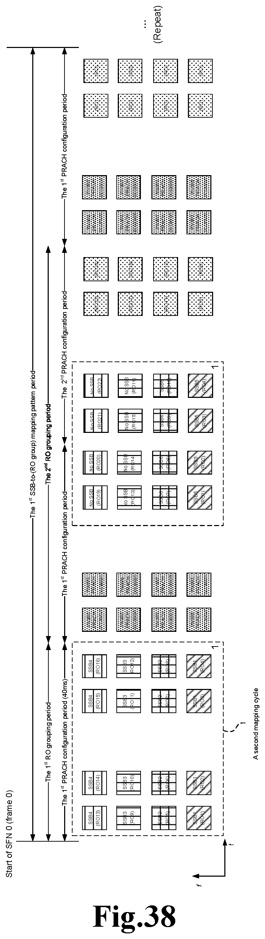

For example, the second time period includes an integral number ($K_2$) of third time periods, wherein a third time period includes an integral number of RO groups. Numbers of RO groups and/or numbers of second mapping cycles included in different third time periods in the second time period are identical or different. Wherein, in a second time period, ROs after an integral number of third time periods are insufficient to constitute an RO group (that is, the number of remaining ROs is less than R) or if ROs or RO groups after an integral number of third time periods are not associated with SSBs, the remaining ROs or RO groups are not used for repetition transmission of Msg1 with a repetition number of R. That is, the ROs or RO groups that are not associated with SSBs after an integral number of third time periods are not used for repetition transmission of Msg1 with a repetition number of R. FIG. 38 is a schematic diagram of the mapping relationship. As shown in FIG. 38, R=4, $T_3$=1 (the SSB indices are respectively associated with one RO group in a second mapping cycle), and X=4. It is assumed that a second time length of the second time period is 160 ms.

In some embodiments, the first number is related to the second repetition number, and the first message repetition number is identical to or different from the second repetition number. A mode for determining the second repetition number is similar to that for determining the first message repetition number, which shall not be repeated herein any further.

How to order RO groups (how to determine RO group indices, within a certain time period and/or a certain mapping cycle, it is assumed that an SSB index is associated with S RO groups) shall be described below.

In some embodiments, in this time period or this mapping cycle, the RO groups are ordered in an order of time domain first and then frequency domain.

For example, ROs associated with an SSB index are ordered as follows: time-division multiplexed ROs are ordered in an ascending order of time domain resource indices, and then frequency-division multiplexed ROs are ordered in an ascending order of frequency domain resource indices. According to the above order of the ROs included in the RO groups, for example, the RO groups are RO groups 0~(S-1), or RO groups 1~S, or they are not limited thereto.

For example, assuming that the S RO groups respectively include ROs located at the same frequency domain position, the S RO groups are ordered as follows: time-division multiplexed RO groups are ordered in an ascending order of time domain resource indices, and then frequency-division multiplexed RO groups are ordered in an ascending order of frequency domain resource indices.

For example, based on a first RO (or a reference RO), an RO group may include one or more first ROs (reference ROs). For example, the S RO groups are ordered as follows: first ROs of an (first RO time-division multiplexed) RO group are arranged in an ascending order of time domain resource indices, and then first ROs of the (first RO frequency-division multiplexed) RO group are arranged in an ascending order of frequency domain resource indices.

In some embodiments, the first RO refers to a first one of ROs in an RO group; however, it is not limited thereto. A first one of ROs in an RO group, for example, refers to a first one of ROs in the RO group ordered in an order as follows: time-division multiplexed ROs are arranged in an ascending order of time domain resource indices, and then frequency-division multiplexed ROs are arranged in an ascending order of frequency domain resource indices; or, a first one of ROs in the RO group ordered in an order as follows: frequency division multiplexed ROs are arranged in an ascending order of frequency domain resource indices, and then time division multiplexed ROs are arranged in an ascending order of time domain resource indices.

In some embodiments, in the time period or the mapping cycle, the RO groups are ordered in an order of frequency domain first and then time domain.

For example, ROs associated with an SSB index are ordered as follows: frequency-division multiplexed ROs are ordered in an ascending order of frequency domain resource indices, and then time-division multiplexed ROs are ordered in an ascending order of time domain resource indices. According to the above order of the ROs included in the RO groups, for example, the RO groups are RO groups 0~(S-1), or RO groups 1~S, or they are not limited thereto.

For example, assuming that S RO groups include ROs located at the same frequency domain position, the S RO groups are ordered as follows: frequency-division multiplexed RO groups are arranged in an ascending order of frequency domain resource indices, and then time-division multiplexed RO groups are arranged in an ascending order of time domain resource indices.

For example, based on a first RO (or a reference RO), an RO group may include one or more first ROs (reference ROs). For example, the S RO groups are ordered as follows: first ROs of an (first RO frequency-division multiplexed) RO group are arranged in an ascending order of frequency domain resource indices, and then first ROs of the (first RO time-division multiplexed) RO group are arranged in an ascending order of time-domain resource indices.

In some embodiments, the first RO refers to a first one of ROs in an RO group; however, it is not limited thereto. A first one of ROs in an RO group, for example, refers to a first one of ROs in the RO group ordered in an order as follows: time-division multiplexed ROs are arranged in an ascending order of time domain resource indices, and then frequency-division multiplexed ROs are arranged in an ascending order of frequency domain resource indices; or, a first one of ROs in the RO group ordered in an order as follows: frequency-division multiplexed ROs are arranged in an ascending order of frequency domain resource indices, and then time-division multiplexed ROs are arranged in an ascending order of time domain resource indices.

The above time period is, for example or the first time period or the second time period or the third time period or the fourth time period, and the above mapping cycle is, for example, the first mapping cycle or the second mapping cycle.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

In some embodiments, for the case of PRACH repetition, the terminal equipment may not transmit PRACHs on one of or a part of or all (each) of second ROs to which a RACH attempt corresponds due to a first cause, and/or may transmit PRACHs with reduced power on one of or a prat of or all (each) of second ROs to which a time of RACH attempt corresponds due to a second cause, which shall be described below in detail.

In some embodiments, the first cause includes: power allocation for PUSCH/PUCCH/PRACH/SRS transmission (for example, a sum of transmit power of PUSCH/PULCH/PRACH/SRS and transmit power of a PRACH is greater than maximum transmit power), or power allocation in dual-connectivity EN-DC, NE-DC or NR-DC operations, or slot format determination, or that transmission occasions of PUSCH/PULCH/PRACH/SRS are in the same slot, or a gap between PRACH transmission and PUSCH/PCCH/SRS transmission is small, or a DAPS operation, or an HD-UE operation in paired spectrum, etc.

In some embodiments, the second cause includes power allocation for PUSCH/PUCCH/PRACH/SRS transmission (for example, a sum of transmit power PUSCH/PUCCH/PRACH/SRS and transmit power of a PRACH is greater than maximum transmit power), or power allocation in dual-connectivity EN-DC, NE-DC, or NR-DC operations.

In some embodiments, in the case of PRACH repetition, due to the first and/or second cause(s), for a random access attempt, following may occur in PRACH transmission that: (1) the terminal equipment does not transmit a PRACH or transmits a PRACH with reduced power on each (all) of second ROs in a random access attempt; and (2) the terminal equipment does not transmit a PRACH or transmits a PRACH with reduced power on a part of second ROs in a random access attempt. Wherein, (2) includes: (2-1) the terminal equipment does not transmit a PRACH or transmits a PRACH with reduced power on at least a ninth number of or at most tenth number of second ROs in a random access attempt; and (2-2) the terminal equipment does not transmit a PRACH on a specific second RO in a random access attempt, or, the terminal equipment transmits a PRACH with reduced power on a second RO in a random access attempt.

In some embodiments, when the above situations occur due to the first or second cause, a physical layer of the terminal equipment notifies a higher layer to suspend a preamble power ramping counter, or may notify a higher layer to suspend a preamble power ramping counter (whether it notifies may be dependent on implementation of the terminal equipment), or does not notify a higher layer to suspend a preamble power ramping counter, which shall be illustrated below respectively.

Example 1: when the terminal equipment does not transmit a PRACH on all (E) ROs (due to the first cause) or transmits a PRACH with reduced power (due to the second cause) (in the same RACH attempt),

> one mode includes that: the physical layer (layer 1) notifies the higher layer (e.g. an MAC layer or an MAC entity) to suspend a preamble power ramping counter;
> another mode includes that: the physical layer (layer 1) may notify the higher layer (e.g. an MAC layer or an MAC entity) to suspend a preamble power ramping counter. That is, it may notify or may not notify, and whether it notifies is dependent on implementation of the terminal equipment.

Example 2: when the terminal equipment does not transmit a PRACH (due to the first cause) or transmits a PRACH with reduced power (due to the second cause) (in the same RACH attempt) on at least a part of (e.g. at least/not less than 1 (a ninth number)) or exceeding/more than 1 (a ninth number) or at least/not less than a half (a ninth number) of or exceeding/more than a half (a ninth number) of or at least/not less than a ninth number (e.g. E/2 or $\lceil E/2 \rceil$ or $\lfloor E/2 \rfloor$) of or exceeding/more than a ninth number (e.g. E/2 or $\lceil E/2 \rceil$ or $\lfloor E/2 \rfloor$) of ROs,

> one mode includes that: its physical layer (layer 1) notifies the higher layer (e.g. an MAC layer or an MAC entity) to suspend a preamble power ramping counter;
> another mode includes that: its physical layer (layer 1) may notify the higher layer (e.g. an MAC layer or an MAC entity) to suspend a preamble power ramping counter.

That is, it may notify or may not notify, and whether it notifies is dependent on implementation of the terminal equipment.

Example 3: when the terminal equipment does not transmit a PRACH (due to the first cause) or transmits a PRACH with reduced power (due to the second cause) (in the same RACH attempt) on a part of/F (a ninth number) (e.g. F=1, F<E) ROs,

one mode includes that: the physical layer (layer 1) notifies the higher layer (e.g. an MAC layer or an MAC entity) to suspend a preamble power ramping counter;

another mode includes that: the physical layer (layer 1) may notify the higher layer (e.g. an MAC layer or an MAC entity) to suspend a preamble power ramping counter. That is, it may notify or may not notify, and whether it notifies is dependent on implementation of the terminal equipment.

For example, the modes in Example 1 and Example 3 may be implemented in a combined manner, the one mode is used in the case in Example 1, and the other mode is used in the case in Example 3. Specifically, for example, (in the same attempt) when a PRACH is not transmitted on all (E) ROs (due to the first cause), the one mode is used; and when a PRACH is not transmitted on a part of ROs (due to the second cause), the other mode is used.

Example 4: when the terminal equipment does not transmit a PRACH (due to the first cause) or transmits a PRACH with reduced power (due to the second cause) (in the same RACH attempt) on at most a part of (e.g. at least F (e.g. E=1)) (a tenth number) or at most/not more than E-1 or less than E-1 or at most/not more than a half or less than a half of or at most/not more than a tenth number (e.g. E/2 or $\lceil E/2 \rceil$ or $\lfloor E/2 \rfloor$) of or less than a tenth number (e.g. E/2 or [E/2] or $\lfloor E/2 \rfloor$) of ROs,

one mode includes that: the physical layer (layer 1) notifies the higher layer (e.g. an MAC layer or an MAC entity) to suspend a preamble power ramping counter;

another mode includes that: the physical layer (layer 1) may notify the higher layer (e.g. an MAC layer or an MAC entity) to suspend a preamble power ramping counter. That is, it may notify or may not notify, and whether it notifies is dependent on implementation of the terminal equipment.

For example, the modes in Example 2 and Example 4 may be implemented in a combined manner, the one mode is used in the case in Example 2, and the other mode is used in the case in Example 4. Specifically, for example, when a PRACH is not transmitted on more than E/2 ROs, the one mode is used; and when a PRACH is not transmitted on at least one RO and at most E/2 ROs, the other mode is used.

Example 5: when the terminal equipment does not transmit a PRACH (due to the first cause) or transmits a PRACH with reduced power (due to the second cause) (in the same RACH attempt) on a specific (e.g. a first one or a last one) RO,

one mode includes that: the physical layer (layer 1) notifies the higher layer (e.g. an MAC layer or an MAC entity) to suspend a preamble power ramping counter;

another mode includes that: the physical layer (layer 1) may notify the higher layer (e.g. an MAC layer or an MAC entity) to suspend a preamble power ramping counter. That is, it may notify or may not notify, and whether it notifies is dependent on implementation of the terminal equipment.

In the above examples, the modes used for the cases of not transmitting or transmitting a RPACH with reduced power are identical or different.

In some embodiments, for the case of PRACH repetition, when the terminal equipment changes a spatial domain transmission filter before first time of PRACH transmission in a random access attempt for PRACH retransmission, the physical layer of the terminal equipment notifies the higher layer to suspend the preamble power ramping counter, or may notify the higher layer to suspend a preamble power ramping counter, or does not notify the higher layer to suspend a preamble power ramping counter. Wherein, for PRACH transmissions of the same RACH attempt, spatial domain transmission filters are identical. Therefore, the spatial transmission filters will only occur between PRACH transmissions of different RACH attempts. For a non-first time of RACH attempt, if a spatial transmission filter is changed before a first time of PRACH transmission/retransmission, its physical layer ((layer 1) notifies the higher layer (e.g. an MAC layer or an MAC entity) to suspend a preamble power ramping counter.

In some embodiments, before the first time of PRACH transmission/retransmission in one (non-first time) time of RACH attempt or a first one of second ROs, the physical layer ((layer 1) notifies the higher layer (e.g. an MAC layer or an MAC entity) to suspend a preamble power ramping counter.

In some embodiments, in the case where the higher layer receives the above notification for suspending a preamble power ramping counter, the same method as that for the case of non-PRACH repetition is used to set the preamble power ramping counter.

For example, for non-PRACH repetition, the preamble power ramping counter will not be incremented by 1 for a next time of PRACH transmission. When the higher layer does not receive the notification for suspending a preamble power ramping counter from the physical layer, when no LBT failure indication is received from a lower layer for a previous time of random access preamble transmission and SSBs or CSI-RSs selected in the previous time of random access preamble transmission are not changed, the preamble power ramping counter will be incremented by 1.

In some embodiments, for the case of PRACH repetition, when the higher layer does not receive the notification for suspending a preamble power ramping counter from the physical layer, when the first message repetition number is not increased, no LBT failure indication is received from a lower layer for the previous time of random access preamble transmission and the SSBs or CSI-RSs selected in the previous time of random access preamble transmission are not changed, the preamble power ramping counter is incremented by 1. That is, how the higher layer sets a preamble power ramping counter may also be related to whether the first message repetition number is changed. For example, when the first message repetition number is changed/incremented, the preamble power ramping counter will not be incremented by 1.

In some embodiments, for the case of PRACH repetition, the following method is used to calculate for transmit power of the above PRACH.

In some embodiments, the above transmitting with reduced power is relative to reduced power calculated by using the following method, or, in other words, reduced power based on power calculated by using the following method.

In some embodiments, for PRACH transmissions corresponding to different second ROs in a random access attempt, the terminal equipment calculates transmit power respectively. Or, for PRACH transmissions corresponding to different second ROs in a random access attempt, the terminal equipment calculates transmit power of PRACH transmission to which one (e.g. a first) second RO corresponds, and other PRACH transmissions in the random access attempt are transmitted with power identical to the transmit power of the PRACH transmission to which one second RO corresponds.

In some embodiments, a method for calculating transmit power includes: calculating target received power of PRACH transmission in a random access attempt by an MAC layer, the target received power PREAMBLE_RECEIVED_TARGET_POWER=preambleReceivedTargetPower + DELTA_PREAMBLE + (PREAMBLE_POWER_RAMPING_COUNTER - 1) × PREAMBLE_POWER_RAMPING_STEP; where, preambleReceivedTargetPower denotes preamble target received power, DELTA_PREAMBLE denotes a power offset related to a preamble, PREAMBLE_POWER_RAMPING_COUNTER is a preamble power ramping counter with an initialization value of 1, and PREAMBLE_POWER_RAMPING_STEP is a preamble power ramping step size. Then, the physical layer of the terminal equipment determines transmit power for PRACH transmission i according to the target received power, the transmit power being equal to $P_{PRACH,b,f,c}(i)=\min\{P_{CMAX,f,c}(i), P_{PRAC,target,f,c} + PL_{b,f,c}\}$; where, $P_{CMAX,f,}(i)$ is maximum output power configured for a transmission occasion i of a serving cell c, $P_{PRACH,t\,arget,f,c}$ is determined target received power PREAMBLE_RECEIVED_TARGET_POWER, and $PL_{b,f,c}$ is a pathloss obtained in measuring a downlink reference signal.

In some embodiments, a method for calculating transmit power includes: calculating total target received power of all (possible) PRACH transmissions (of a number equal to the number of second ROs to which a random access attempt corresponds and/or a first message repetition number used by the random access attempt) in the random access attempt by an MAC layer, the total target received power PREAMBLE_RECEIVED_TARGET_POWER=preambleReceivedTargetPower +DELTA_PREAMBLE + (PREAMBLE_POWER_RAMPING_COUNTER - 1) × PREAMBLE_POWER_RAMPING_STEP, and determining target received power PREAMBLE_RECEIVED_TARGET_POWER, PREAMBLE_RECEIVED_TARGET_POWER=PREAMBLE_RECEIVED_TARGE T_POWER - 10 * log10(numRepetitionPerRachAttempt) of each/one PRACH transmission according to the total target received power and the first message repetition number of the random access attempt; where, numRepetitionPerRachAttempt denotes the first message repetition number (equal to the number of second ROs to which the random access attempts corresponds), and meanings of other parameter are as described above, which shall not be repeated herein any further. Then, the physical layer of the terminal equipment determines transmit power for random access transmission according to the target received power, the transmit power being equal to $P_{PRACH,b,f,c}(i)=\min\{P_{CMAX,f,c}(i), P_{PRACH,target,f,c} + PL_{b,f,c}\}$.

In some embodiments, the physical layer of the terminal equipment calculates transmit power for PRACH transmissions of different ROs in an RACH attempt by using the above methods respectively. In calculating transmit power for PRACH transmissions of different ROs, identical or different parameters are used, the parameters including but not limited to RSRP or pathloss, etc. Or, the physical layer of the terminal equipment only calculates PRACH transmission of one RO (such as a first one) in an RACH attempt by using the above methods, and transmit power identical to that of the PRACH transmission of the one RO is used for PRACH transmissions of other ROs.

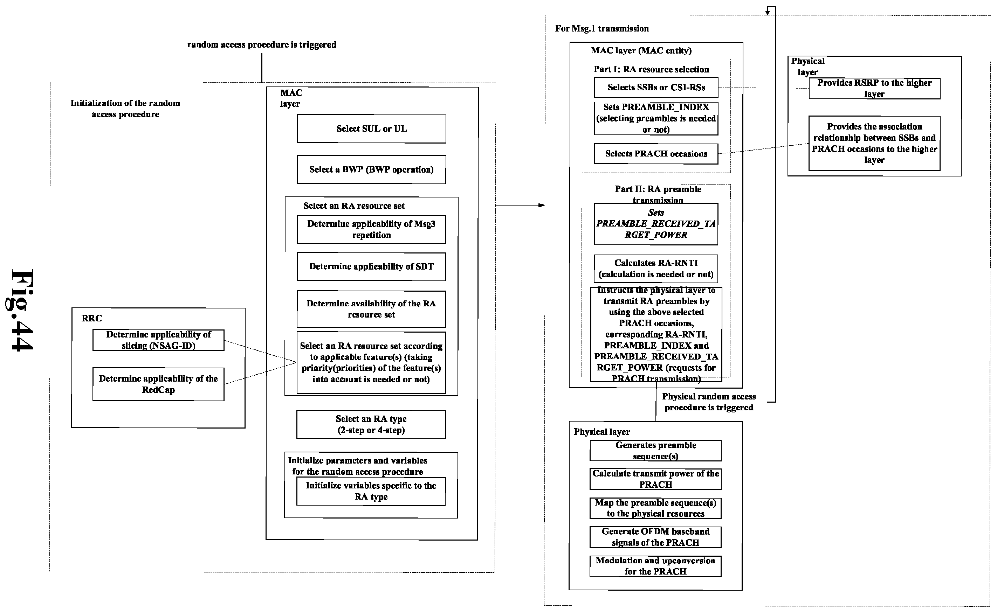

FIG. 44 is a schematic diagram of details of implementation from triggering to transmission of Msg1 in the random access procedure of the embodiments of this disclosure. As shown in FIG. 44, the implementation includes that:
the random access procedure is triggered when following events occur: initial access for RRC_IDLE; an RRC connection reestablishment process; that when a UL synchronization state is "insynchronous", DL or UL data arrive during RRC_CONNECTED or RRC_INACTIVE while an SDT process is in progress; when there are no available PUCCH resources for an SR, UL data arrive during RRC_CONNECTED or RRC_INACTIVE while an SDT process is in progress; an SR fails; a request when RRC is in synchronization reconfiguration (such as handover); an RRC connection recovery process of RRC_INACTIVE; establishing time alignment for a secondary TAG; other SI requests; beam failure recovery;

continuous UL LBT failures on an SpCell; SDT in RRC_INACTIVE; and a positioning purpose during RRC_CONNECTED needing a random access procedure.

Initialization of the random access procedure includes that the MAC layer selects an SUL or UL, selects a BWP, selects a random access resource set (including determining applicability of Msg3 repetition, determining applicability of SDT, determining availability of a random access resource set, selecting a random access resource set according to applicable features (determining applicability of slices according to an RRC layer and applicability of an RedCap), and selecting an RA type (2-step or 4-step), initializes parameters and variables for a random access procedure, and completes initialization of a random access procedure.

Transmission of Msg1 includes that the MAC layer selects random access resources (including selecting SSBs or CSI-RSs, setting a PREAMBLE_INDEX, selecting ROs (providing a mapping relationship between SSBs and ROs to a higher layer)), performs random access preamble transmission (setting target received power, calculating an RA-RNTI (optional), instructing a physical layer to use selected ROs, a corresponding RA-RNTI, a PREAMBLE_INDEX, and transmitting a random access preamble with target received power); the physical layer generates a preamble sequence, calculates transmit power of a PRACH, maps a preamble sequence to a physical resource, generates an OFDM baseband signal of a PRACH, and performs modulation and upconversion for a PRACH.

In the above process, the selecting an RA resource set, selecting ROs and calculating transmit power of a PRACH may be implemented separately or in a combined manner by using the methods described in the above embodiments, and the embodiments of this disclosure is not limited thereto.

It should be noted that FIG. 44 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 44.

It should be noted that the random access procedure of this disclosure supports CBRA or CFRA, and the embodiments of this disclosure are not limited thereto.

In some embodiments, for 4-step CBRA used for an SI request based on Msg1, the terminal equipment receives third configuration information (SI-RequestConfig), the third configuration information including configuration for the SI request based on Msg1. Currently, allowed ROs (or ROs available for the SI request) are indicated via ra-ssb-OccasionMaskIndex by using the same method as the fifth information (in one case, ra-ssb-OccasionMaskIndex may be taken as the fifth information). Therefore, if Msg1 repetition is also supported, the third configuration information should include the third information, such as being included in SI-RequestResources (used to configure preambles and ROs for the SI request). And/or, information for indicating the first message repetition number may be introduced into the third configuration information.

In some embodiments, for CFRA used for synchronization reconfiguration (e.g. handover), the terminal equipment receives fourth configuration information, the fourth configuration information (RACH-ConfigDedicated) being used to configure specific (to the CFRA) random access parameters. Currently, a problem similar to that in the above CBRA exists in indicating allowed ROs (or available for the CFRA) via ra-ssb-OccasionMaskIndex by using the same method as the fifth information (in one case, ra-ssb-OccasionMaskIndex may be taken as the fifth information). Therefore, if Msg1 repetition is also supported, the third information may be introduced into the fourth configuration information, such as being included in SSBs (used to configure SSBs (indices) for the CFRA and corresponding preambles and ROs) of resources (used to configure downlink reference signals and corresponding preambles and ROs for the CFRA). And/or, information for indicating the first message repetition number may be introduced into the fourth configuration information.

In some embodiments, for CFRA used for BFR, the terminal equipment receives fifth configuration information, the fifth configuration information BeamFailureRecoveryConfig being used to configure RACH resources and candidate beams for BFR. Currently, a problem similar to that in the above CBRA exists in indicating allowed ROs (or available for the CFRA) via ra-ssb-OccasionMaskIndex by using the same method as the fifth information (in one case, ra-ssb-OccasionMaskIndex may be taken as the fifth information). Therefore, if Msg1 repetition is also supported, the third information may be introduced into the fifth configuration information. And/or, information for indicating the first message repetition number may be introduced into the fifth configuration information.

In some embodiments, for CFRA triggered by a PDCCH order, when CRC of DCI format 1_0 is scrambled by a C-RNTI and all bits in a frequency domain resource assignment (FDRA) field therein are set to be 1, DCI format 1_0 is used to trigger the random access procedure (i.e. it is the PDCCH order used to trigger the random access procedure). When a preamble index indicated by a random access preamble index is not 0b000000, CFRA is triggered. Currently, a problem similar to that in the above CBRA exists in indicating allowed ROs of SSBs in a similar manner by using a PRACH mask index. Therefore, if Msg1 repetition is also supported, the third information may be introduced into DCI format 1_0. And/or, information for indicating the first message repetition number may be introduced into DCI format 1_0. For example, an RO is indicated based on a correspondence between a PRACH mask index value and ROs shown in the table below by still using the above PRACH mask index. The RO is a first one of ROs in an RO group to which the first message repetition number indicated by the above information in DCI format 1_0 corresponds. Thus, the terminal equipment transmits PRACHs/preambles by using the RO in the RO group.

| PRACH mask index/ *msgA-SSB-SharedRO-MaskIndex*/ *ssb-SharedRO-MaskIndex* | Allowed ROs of SSBs |
|---|---|
| 0 | All |
| 1 | PRACH occasion index 1 |
| 2 | PRACH occasion index 2 |
| 3 | PRACH occasion index 3 |
| 4 | PRACH occasion index 4 |
| 5 | PRACH occasion index 5 |
| 6 | PRACH occasion index 6 |
| 7 | PRACH occasion index 7 |
| 8 | PRACH occasion index 8 |
| 9 | Every even PRACH occasion |
| 10 | Every odd PRACH occasion |
| 11 | Reserved |
| 12 | Reserved |
| 13 | Reserved |
| 14 | Reserved |
| 15 | Reserved |

The embodiments of this disclosure provide a method for supporting PRACH repetition, including transmit power, and random access resource allocation, etc. Hence, PARCH coverage may be expanded, uplink coverage may be enhanced, thereby improving service quality of the network and lowering capital expenditure (CAPEX) and operational expenditure (OPEX).

Embodiments of a second aspect

The embodiments of this disclosure provide an information transceiving method, which shall be described from a network device side.

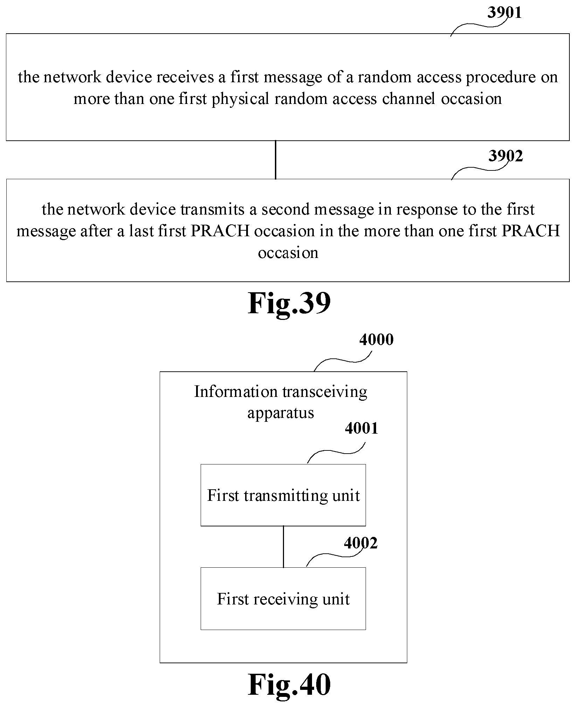

FIG. 39 is a schematic diagram of the information transceiving method of the embodiments of this disclosure. As shown in FIG. 39, the method includes:

3901: the network device receives a first message of a random access procedure on more than one first physical random access channel occasion (PRACH occasion); and
3902: the network device transmits a second message in response to the first message after a last first PRACH occasion in the more than one first PRACH occasion.

It should be noted that FIG. 39 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 39.

FIG. 46 is a schematic diagram of an information transmission method of the embodiments of this disclosure. As shown in FIG. 46, the method includes:

4601: a network device transmits one or more second configuration information to a terminal equipment, wherein one second configuration information includes one or more first configuration information, one first configuration information including first information for configuring a feature combination, and/or second information for configuring a random access preamble sequence, and/or third information for configuring RO group(s), and/or fourth information for configuring RO(s), and/or fifth information for configuring RO(s).

Reference may be made to the embodiments of the first aspect for implementations of 3901-3902 and 4601, which shall not be repeated herein any further.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

Embodiments of a third aspect

The embodiments of this disclosure provide an information transceiving apparatus. The apparatus may be, for example, a terminal equipment, or one or some components or assemblies configured in the terminal equipment, with contents identical to those in the embodiments of the first aspect being not going to be described herein any further.

FIG. 40 is a schematic diagram of the information transceiving apparatus of the embodiments of this disclosure. As shown in FIG. 40, the information transceiving apparatus 4000 includes:

> a first transmitting unit 4001 configured to transmit a first message of a random access procedure on more than one first physical random access channel occasion (PRACH occasion, RO); and
>
> a first receiving unit 4002 configured to receive a second message in response to the first message after a last first PRACH occasion in the more than one first PRACH occasion;
>
> or,
>
> the first receiving unit 4002 receives one or more second configuration information transmitted by a network device, wherein one second configuration information includes one or more first configuration information, one first configuration information including first information for configuring a feature combination, and/or second information for configuring a random access preamble sequence, and/or third information for configuring RO group(s), and/or fourth information for configuring RO(s), and/or fifth information for configuring RO(s).

In some embodiments, reference may be made to the embodiments of the first aspect for implementations of the first transmitting unit 4001 and the first receiving unit 4002, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information transceiving apparatus 4000 may further include other components or modules, and reference may be made to related techniques for particulars of these components or modules.

Furthermore, for the sake of simplicity, connection relationships between the components or modules or signal profiles thereof are only illustrated in FIG. 40. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

Embodiments of a fourth aspect

The embodiments of this disclosure provide an information transceiving apparatus. The apparatus may be, for example, a network device, or one or some components or assemblies configured in the network device, with contents identical to those in the embodiments of the first or the second aspect being not going to be described herein any further.

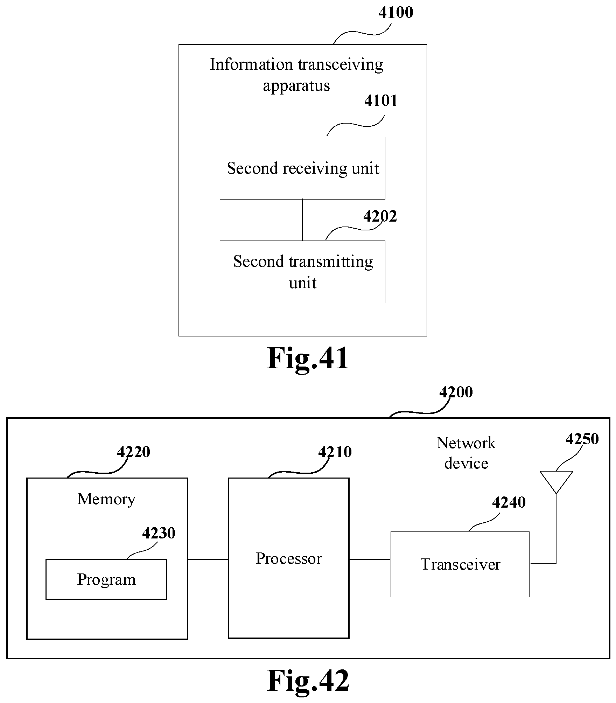

FIG. 41 is a schematic diagram of the information transceiving apparatus of the embodiments of this disclosure. As shown in FIG. 41, the information transceiving apparatus 4100 includes:

> a second receiving unit 4101 configured to receive a first message of a random access procedure on more than one first physical random access channel occasion (PRACH occasion); and
>
> a second transmitting unit 4102 configured to transmit a second message in response to the first message after a last first PRACH occasion in the more than one first PRACH occasion;
>
> or,
>
> the second transmitting unit 4102 transmits one or more second configuration information to a terminal equipment, wherein one second configuration information comprises one or more first configuration information, one first configuration information comprising first information for configuring feature combinations, and/or second information for configuring random access preamble sequences, and/or third information for configuring RO group(s), and/or fourth information for configuring RO(s), and/or fifth information for configuring RO(s).

In some embodiments, reference may be made to the embodiments of the first or the second aspect for implementations of the second receiving unit 4101 and the second transmitting unit 4102, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information transceiving apparatus 4100 may further include other components or modules, and reference may be made to related techniques for particulars of these components or modules.

Furthermore, for the sake of simplicity, connection relationships between the components or modules or signal profiles thereof are only illustrated in FIG. 41. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

Embodiments of a fifth aspect

The embodiments of this disclosure provide a communication system, and reference may be made to FIG. 1, with contents identical to those in the embodiments of the first to fourth aspects being not going to be described herein any further.

In some embodiments, the communication system 100 may at least include a network device 101 and/or a terminal equipment 102, wherein the network device 101 includes the information transceiving apparatus 4100 in the embodiments of the fourth aspect, and the terminal equipment 102 includes the information transceiving apparatus 4000 in the embodiments of the fifth aspect, which shall not be described herein any further.

The embodiments of this disclosure further provide a network device, which may be, for example, a base station. However, this disclosure is not limited thereto, and it may also be another network device.

FIG. 42 is a schematic diagram of a structure of the network device of the embodiments of this disclosure. As shown in FIG. 42, the network device 4200 may include a processor 4210 (such as a central processing unit (CPU)) and a memory 4220, the memory 4220 being coupled to the processor 4210. Wherein, the memory 4220 may store various data, and furthermore, it may store a program 4230 for information processing, and execute the program 4230 under control of the processor 4210.

For example, the processor 4210 may be configured to execute a program to carry out the information transceiving method described in the embodiments of the first aspect.

Furthermore, as shown in FIG. 42, the network device 4200 may include a transceiver 4240, and an antenna 4250, etc. Wherein, functions of the above components are similar to those in the related art, and shall not be described herein any further. It should be noted that the network device 4200 does not necessarily include all the parts shown in FIG. 42, and furthermore, the network device 4200 may include parts not shown in FIG. 42, and the related art may be referred to.

The embodiments of this disclosure further provide a terminal equipment; however, this disclosure is not limited thereto, and it may also be another equipment.

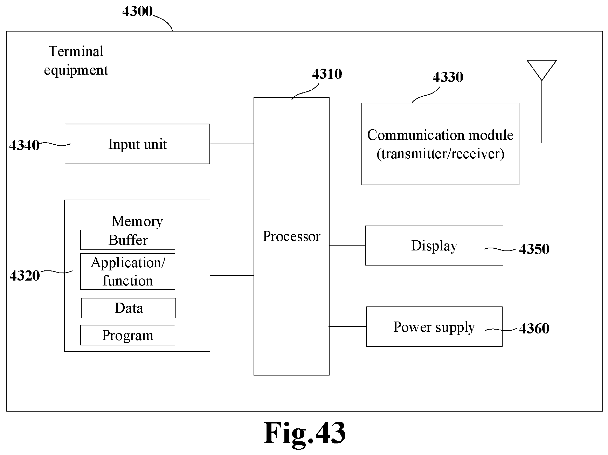

FIG. 43 is a schematic diagram of the terminal equipment of the embodiments of this disclosure. As shown in FIG. 43, the terminal equipment 4300 may include a processor 4310 and a memory 4320, the memory 4320 storing data and a program and being coupled to the processor 4310. It should be noted that this figure is illustrative only, and other types of structures may also be used, so as to supplement or replace this structure and achieve a telecommunications function or other functions.

For example, the processor 4310 may be configured to execute a program to carry out the information transceiving method as described in the embodiments of the second aspect.

As shown in FIG. 43, the terminal equipment 4300 may further include a communication module 4330, an input unit 4340, a display 4350, and a power supply 4360; wherein functions of the above components are similar to those in the related art, which shall not be described herein any further. It should be noted that the terminal equipment 4300 does not necessarily include all the parts shown in FIG. 43, and the above components are not necessary. Furthermore, the terminal equipment 4300 may include parts not shown in FIG. 43, and the related art may be referred to.

Embodiments of this disclosure provide a computer program, which, when executed in a terminal equipment, will cause the terminal equipment to carry out the information transceiving method as described in the embodiments of the second aspect.

Embodiments of this disclosure provide a storage medium, including a computer program, which will cause a terminal equipment to carry out the information transceiving method as described in the embodiments of the second aspect.

Embodiments of this disclosure provide a computer program, which, when executed in a network device, will cause the network device to carry out the information transceiving method as described in the embodiments of the first aspect.

Embodiments of this disclosure provide a storage medium, including a computer program, which will cause a network device to carry out the information transceiving method as described in the embodiments of the first aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.

1. An information transceiving method, applicable to a terminal equipment, characterized in that the method includes:

transmitting a first message of a random access procedure by the terminal equipment on more than one first physical random access channel occasion (PRACH occasion, RO); and
receiving a second message in response to the first message by the terminal equipment after a last first PRACH occasion in the more than one first PRACH occasion.

2. The method according to supplement 1, wherein the more than one first RO belong to one RO group and/or belong to a set of random access resources.

3. The method according to supplement 1 or 2, wherein a last first RO is a last RO in the RO group.

4. The method according to supplement 2, wherein the RO group belongs to the set of random access resources.

5. The method according to supplement 2 or 3, wherein the set of random access resources is configured by one or more other information in first configuration information including first information for configuring a feature combination.

6. The method according to supplement 5, wherein the feature combination configured by the first information includes first message repetition and/or one or more first message repetition numbers, and/or, one or more first message repetition numbers include a first message repetition number adopted in the random access procedure and/or a random access attempt to which the first message corresponds and/or the first message.

7. The method according to supplement 6, wherein the set of random access resources includes RO groups corresponding to the one or more first message repetition numbers.

8. The method according to supplement 7, wherein the number of ROs included in (any) one RO group corresponding to a first message repetition number is equal to the first message repetition number, or the number of ROs included in (any) one RO group in RO group(s) to which the first message repetition number corresponds is greater than or equal to the first message repetition number.

9. The method according to any one of supplements 2-8, wherein the method further includes:
selecting ROs from the set of random access resources by the terminal equipment, including selecting the RO group from the set of random access resources by the terminal equipment, or selecting one or more ROs in the RO group from the set of random access resources.

10. The method according to supplement 9, wherein the selecting the RO group from the set of random access resources includes: selecting the RO group from the RO group(s) in the set of random access resources corresponding to the random access procedure and/or the random access attempt to which the first message corresponds and/or the first message repetition number.

11. The method according to supplement 9, wherein the selecting one or more ROs in the RO group from the set of random access resources includes selecting one or more ROs in the RO group in the RO group(s) corresponding to the random access procedure and/or the random access attempt to which the first message corresponds and/or the first message repetition number used by the first message.

12. The method according to supplement 9 or 10 or 11, wherein the one or more ROs include a first one of ROs.

13. The method according to supplement 12, wherein the first one of ROs refers to an RO in the RO groups with a smallest first RO index or second RO index or third RO index, and/or a first one of ROs in the time domain.

14. The method according to any one of supplements 1-13, wherein the method further includes:
the first message repetition and/or one or more first message repetition numbers is/are applicable to the random access procedure.

15. The method according to supplement 14, wherein the terminal equipment selects one or more sets of random access resources.

16. The method according to supplement 15, wherein the one or more sets of random access resources is/are available for the first message repetition (Msg1 repetition) and/or the one or more first message repetition numbers (the number of repetitions for Msg1).

17. The method according to supplement 16, wherein at least two in the multiple sets of random access resources are available for different first message repetition numbers.

18. The method according to supplement 16, wherein the terminal equipment selects ROs from a set of random access resources available for the first repetition used in the random access attempt and/or the Msg1 transmission.

19. The method according to any one of supplements 1-18, wherein the method further includes: determining by the terminal equipment whether the first message repetition and/or one or more first message repetition numbers is/are applicable to the random access procedure and/or the random access attempt to which the first message corresponds and/or the first message according to at least one of one or more first RSRP thresholds.

20. The method according to supplement 19, wherein at least one of the one or more first RSRP thresholds includes a maximum value in the one or more first RSRP thresholds.

21. The method according to any one of supplements 1-20, wherein the method further includes:
determining by the terminal equipment a first message repetition number used in a random access procedure and/or a random access attempt and/or an Msg 1 transmission according to at least one of the one or more first RSRP thresholds.

22. The method according to any one of supplements 1-21, wherein the method further includes:
receiving eighth information transmitted by the network device, and determining RO groups and/or an association between SSBs and RO groups according to the eighth information, by the terminal equipment.

23. The method according to any one of supplements 1-22, wherein the method further includes:
receiving, by the terminal equipment, one or more second configuration information transmitted by the network device, wherein one second configuration information includes one or more first configuration information, one first configuration information including first information for configuring a feature combination, and/or second information for configuring a random access preamble sequence, and/or third information for configuring RO group(s), and/or fourth information for configuring RO(s), and/or fifth information for configuring RO(s).

24. The method according to supplement 23, wherein the first configuration information is used to configure a feature combination and/or a set of random access resources to which the feature combination corresponds.

25. The method according to supplement 23, wherein the second configuration information is used to configure/define cell-specific random access parameters.

26. The method according to supplement 23, wherein one first configuration information includes one first information, the one first information being used to configure one feature combination.

27. The method according to supplement 23 or 26, wherein one feature combination includes or does not include first message repetitions and/or a first message repetition number, and/or, one feature combination includes at most one first message repetitions number, or includes more than one first message repetition numbers.

28. The method according to supplement 27, wherein for a feature combination including multiple first message repetition numbers, two corresponding random access preamble sequences in the multiple first message repetition numbers are identical or different, and/or two corresponding ROs in the multiple first message repetition numbers are identical or different.

29. The method according to supplement 28, wherein ROs corresponding to two first message repetition numbers to which different random access preamble sequences correspond are identical or different.

30. The method according to supplement 28, wherein ROs corresponding to two first message repetition numbers corresponding to identical random access preamble sequences are different.

31. The method according to supplement 28, wherein the identical refers to presence of intersection or complete identical or partially identical, and the different refers to absence of intersection or completely different.

32. The method according to supplement 28, wherein the ROs to which a first message repetition number corresponds include: RO(s) included in RO group(s) to which the first message repetition number corresponds.

33. The method according to supplement 27, wherein for a feature combination that includes multiple first message repetition numbers, RO groups to which different first message repetition numbers correspond include identical ROs; or, ROs included in RO groups with smaller first message repetition numbers are a subset of ROs included in RO groups with larger first message repetition numbers; or, the ROs included in the RO groups with larger first message repetition numbers are a subset of the ROs included in the RO groups with smaller first message repetition numbers.

34. The method according to supplement 27, wherein for a feature combination that includes multiple first message repetition numbers, ROs to which different first message repetition numbers correspond are identical; or, ROs to which smaller first message repetition numbers correspond are a subset of ROs to which larger first message repetition numbers correspond; or, the ROs to which the larger first message repetition numbers correspond are a subset of the ROs to which smaller first message repetition numbers correspond.

35. The method according to any one supplements 23-34, wherein the second information is used to configure a random access preamble sequence to which the feature combination configured by the first information corresponds.

38. The method according to any one supplements 23-35, wherein for a feature combination including multiple first message repetition numbers, the second information configures corresponding random access preamble sequences respectively for different first message repetition numbers in the feature combination.

39. The method according to any one supplements 23-38, wherein the second information includes one or more first information elements (IEs), the first IEs being used to configure a corresponding random access preamble sequence for a first message repetition number; or, the second information includes one or more first information fields, the first information fields being used to configure a corresponding random access preamble sequence for a first message repetition number.

40. The method according to any one supplements 23-39, wherein the third information is used to configure the RO group(s) to which the feature combination configured by the first information corresponds

41. The method according to supplement 40, wherein the feature combination configured by the first information includes a first message repetition and/or one or more first message repetition numbers.

42. The method according to any one of supplements 23-40, wherein for a feature combination that includes multiple first message repetition numbers, the third information configures corresponding RO groups respectively for different first message repetition numbers in the feature combination.

43. The method according to any one of supplements 23-42, wherein the third information includes one or more second IEs, the one or more second IEs being used to configure corresponding RO groups for a first message repetition number; or, the third information includes one or more second information fields, the one or more second information fields being used to configure corresponding RO groups for a first message repetition number.

44. The method according to any one of supplements 23-43, wherein the third information configures RO group(s) per time period or per mapping cycle.

45. The method according to any one of supplements 23-44, wherein the third information configures the RO groups based on the first repetition number and/or a first RO group index and/or a second RO group index and/or a first group index and/or a first RO index and/or a second RO index and/or a second group index.

46. The method according to supplement 45, wherein the first repetition number is predefined, or is configured by sixth information used to configure the first repetition number, or is configured by seventh information used to configure a first RSRP threshold for the first message repetition.

47. The method according to supplement 45, wherein the first repetition number is the first message repetition number included in the feature combination configured by the first information.

48. The method according to supplement 47, wherein for a feature combination that includes multiple first message repetition numbers, the third information configures RO groups corresponding to the first message repetition numbers respectively based on the multiple first message repetition numbers.

49. The method according to supplement 48, wherein the number of ROs included in (any) one RO group corresponding to a first message repetition number is equal to the first message repetition number.

50. The method according to supplement 45 or 46, wherein the first repetition number is a maximum value in first message repetition numbers configured in (one or more the first configuration information of) the second configuration information, and/or a first message repetition number to which a minimum first RSRP threshold configured by the seventh information corresponds, and/or a first message repetition number to which a first one of first RSRP thresholds configured by the seventh information corresponds, and/or a maximum value in the first message repetition numbers included in the feature combination configured by the first information.

51. The method according to supplement 45, wherein that the third information configures RO groups based on the first repetition number refers to that the third information indicates RO group(s) corresponding to the first repetition number.

52. The method according to supplement 51, wherein the number of ROs included in (any) one RO group corresponding to a first repetition number is equal to the first repetition number.

53. The method according to supplement 51, wherein the method further includes:

determining RO groups and/or an association between SSBs and RO groups by the terminal equipment according to the first repetition number and other information in the second configuration information.

54. The method according to supplement 51, wherein the method further includes:

determining RO groups to which one or more first message repetition numbers included in the feature combination configured by the first information correspond(s) by the terminal equipment according to the RO group(s) corresponding to the first repetition number.

55. The method according to any one of supplements 45-54, wherein the first RO group index is used to uniquely identify an RO group within a time period or a mapping cycle.

56. The method according to any one of supplements 45-55, wherein the time period is a first time period or a second time period or a third time period or a fourth time period, and the mapping cycle is a first mapping cycle or a second mapping cycle.

57. The method according to supplement 55, wherein the first RO group index represents a sequence number of RO group(s) with which an SSB is associated within the time period or the mapping cycle, or a sequence number of RO group(s) within the time period or the mapping cycle.

58. The method according to supplement 57, wherein the number of ROs included in one RO group in the RO group(s) is equal to the first repetition number.

59. The method according to any one of supplements 45-54, wherein the second RO group index is used to uniquely identify an RO group within RO groups within a time period or a mapping cycle.

60. The method according to any one of supplements 44-59, wherein the time period is a first time period or a second time period or a third time period or a fourth time period, and the mapping cycle is a first mapping cycle or a second mapping cycle.

61. The method according to supplement 55, wherein the second RO group index represents a sequence number of RO group(s) with which an SSB is associated within the RO group(s), or a sequence number of RO group(s) in the RO group(s).

62. The method according to supplement 57, wherein the number of ROs included in one RO group in the RO group(s) is equal to the first repetition number.

63. The method according to any one of supplements 44-54, wherein the first group index is used to uniquely identify an RO group(s) within a time period or a mapping cycle.

64. The method according to any one of supplements 45-63, wherein the time period is a first time period or a second time period or a third time period or a fourth time period, and the mapping cycle is a first mapping cycle or a second mapping cycle or a third mapping cycle.

65. The method according to any one of supplements 55-63, wherein the first group index represents a sequence number of an RO with which an SSB is associated within the time period or the mapping cycle, or a sequence number of an RO within the time period or the mapping cycle.

66. The method according to supplement 57, wherein the number of ROs included in one RO group in the RO group(s) is equal to the first repetition number.

67. The method according to supplement 63, wherein the number of ROs group included in the group of ROs is predefined, or is indicated by the network device.

68. The method according to supplement 63, wherein the RO groups included in the RO groups are determined according to the first RO group index.

69. The method according to any one of supplement 23-68, wherein the third information includes a first RO group index, and/or a second RO group index, and/or a first group index, and/or a first bitmap, and/or a second bitmap, and/or an RO group mask index, and/or a first RIV value.

70. The method according to supplement 69, wherein one bit in the first bitmap corresponds to one or more first RO group indices, or corresponds to one or more first group indices, or corresponds to one or more RO groups, or corresponds to one or more RO group(s).

71. The method according to supplement 69, wherein one bit in the second bitmap corresponds to one or more second RO group indices, or corresponds to one or more RO groups in RO group(s).

72. The method according to supplement 71, wherein the second RO group index and/or the second bitmap and/or the RO group mask index and/or the first RIV value indicate(s) RO groups from RO groups indicated by the first bitmap.

73. The method according to supplement 69, wherein the RO group mask index and/or the first RIV value is/are defined according to the first RO group index and/or the second RO group index.

74. The method according to any one of supplements 45-54, wherein the first RO index is used to uniquely identify an RO within a time period or a mapping cycle.

75. The method according to supplement 44 or 74, wherein the time period is a first time period or a second time period or a third time period or a fourth time period or a first associated time period or a first associated pattern time period, and the mapping cycle is a first mapping cycle or a second mapping cycle or a third mapping cycle.

76. The method according to supplement 74, wherein the first RO index represents a sequence number of an RO with which an SSB is associated within the time period or the mapping cycle, or a sequence number of an RO within the time period or the mapping cycle.

77. The method according to any one of supplements 45-54, wherein the second RO index is used to uniquely identify an RO within an RO group within a time period or a mapping cycle.

78. The method according to supplement 77, wherein the time period is a first time period or a second time period or a third time period or a fourth time period or a first associated time period or a first associated pattern time period, and the mapping cycle is a first mapping cycle or a second mapping cycle or a third mapping cycle.

79. The method according to supplement 74, wherein the second RO index represents a sequence number of an RO with which an SSB is associated within the RO group, or a sequence number of an RO in the RO group.

80. The method according to any one of supplements 45-54, wherein the second group index is used to uniquely identify an RO group within a time period or a mapping cycle.

81. The method according to supplement 80, wherein the time period is a first time period or a second time period or a third time period or a fourth time period or a first associated time period or a first associated pattern time period, and the mapping cycle is a first mapping cycle or a second mapping cycle or a third mapping cycle.

82. The method according to supplement 74, wherein the second group index represents a sequence number of an RO group with which an SSB is associated within the time period or the mapping cycle, or a sequence number of an RO group in the time period or the mapping cycle.

83. The method according to supplement 80, wherein the number of ROs included in the group of ROs is predefined, or is indicated by the network device.

84. The method according to any one of supplements 23-54, wherein the third information includes a first RO index, and/or a second RO index, and/or a second group index, and/or a third bitmap, and/or a fourth bitmap, and/or an RO mask index, and/or a second RIV value.

85. The method according to supplement 84, wherein the third information indicates an RO group by indicating one or more ROs in one RO group.

86. The method according to any one of supplements 23-85, wherein for a feature combination that includes multiple first message repetition numbers, the fourth information configures ROs respectively for different first message repetition numbers.

87. The method according to supplement 86, wherein the method further includes:
determining RO groups and/or a mapping relationship between SSBs and RO groups by the terminal equipment according to the ROs indicated by the fourth information.

88. The method according to supplement 23, wherein the fourth information indicates ROs based on the first RO index and/or the second RO index and/or the third RO index and/or the second group index

89. The method according to any one of supplements 23-88, wherein the fifth information indicates ROs based on a third RO index, the third RO index representing a sequence number of RO(s) with which an SSB is associated within a third mapping cycle.

90. The method according to any one of supplements 23-88, wherein if a feature combination configured by the first information included in a first configuration information includes a first message repetition (Msg1 repetition) and/or one or more first message repetition numbers, the fifth information is absent, and/or the third information and/or fourth information is/are optionally present.

91. The method according to any one of supplements 23-88, wherein for a first configuration information with an included feature combination configured by the first information that does include a first message repetition (Msg1 repetition) and/or does include a first message repetition number, the third information and/or fourth information is/are absent.

92. The method according to any one of supplements 23-88, wherein for a first configuration information with an included feature combination configured by the first information that includes a first message repetition (Msg1 repetition) and/or one or more first message repetition numbers, the third information and/or fourth information is/are optionally present.

93. The method according to any one of supplements 1-92, wherein the seventh information used to configure one or more first RSRP thresholds is received, wherein at least one of the first RSRP thresholds is used by the terminal equipment to determine whether the first message repetition and/or the first message repetition number is/are applicable to a random access procedure, and/or at least one of the first RSRP thresholds is used by the terminal equipment to determine a first message repetition number used in a random access attempt or one time of Msg1 transmission.

94. The method according to any one of supplements 1-93, wherein the method further includes:
for PRACH transmissions corresponding to different second ROs in a random access attempt, calculating transmit power respectively by (a physical layer of) the terminal equipment, or, for PRACH transmissions corresponding to different second ROs in a random access attempt, calculating transmit power of PRACH transmission to which one second RO corresponds.

95. The method according to supplement 94, wherein parameters used in respectively calculating the transmit power are identical or different.

96. The method according to supplement 94, wherein in calculating the transmit power of PRACH transmission to which one second RO corresponds, other PRACH transmissions in the random access attempt are transmitted with power identical to the transmit power of the PRACH transmission to which one second RO corresponds.

97. The method according to any one of supplements 94-96, wherein (an MAC layer of) the terminal equipment calculates preamble target received power according to the first message repetition number.

98. The method according to supplement 97, wherein that (an MAC layer of) the terminal equipment calculates preamble target received power according to the first message repetition number includes:

calculating total (preamble) target received power of all PRACH transmissions in a random access attempt; and determining (preamble) target received power of a PRACH transmission according to the total target received power and a first message repetition number in a random access attempt.

99. The method according to any one of supplements 94-98, wherein the second RO includes a first RO that actually transmits the first message and/or a third RO that does not actually transmit the first message.

100. The method according to any one of supplements 1-99, wherein the method further includes:

in a first case, notifying a higher layer to suspend a preamble power ramping counter, or being able to notify a higher layer to suspend a preamble power ramping counter, or not notifying a higher layer to suspend a preamble power ramping counter, by the physical layer of the terminal equipment;
wherein the first case includes that:

the terminal equipment does not transmit a PRACH or transmits a PRACH with reduced power on each (all) of second ROs in a random access attempt; or
the terminal equipment does not transmit a PRACH or transmits a PRACH with reduced power on a part of second ROs in a random access attempt; or
the terminal equipment changes a spatial domain transmission filter before first PRACH transmission in a random access attempt.

101. The method according to supplement 100, wherein that the terminal equipment does not transmit a PRACH or transmits a PRACH with reduced power on a part of second ROs in a random access attempt includes that:

the terminal equipment does not transmit a PRACH or transmits a PRACH with reduced power on at least a ninth number of or at most tenth number of second ROs in a random access attempt; or,
the terminal equipment does not transmit a PRACH on a specific second RO in a random access attempt; or,
the terminal equipment transmits a PRACH with reduced power on a second RO in a random access attempt.

102. The method according to supplement 100 or 101, wherein.
when the higher layer receives a notification for suspending a preamble power ramping counter from the physical layer, the preamble power ramping counter (PREAMBLE_POWER_RAMPING_COUNTER) is not incremented.

103. The method according to supplement 100 or 101 or 102, wherein before a first one of PRACH transmissions in a random access attempt, the physical layer of the terminal equipment notifies the higher layer to suspend a preamble power ramping counter.

104. The method according to any one of supplements 1-103, wherein,

ROs associated with the same SSB index are ordered in the first time period in an order of time domain first and then frequency domain, wherein every first number (R) of ROs belong to the same RO group;
or,
ROs associated with the same SSB index are ordered in the first time period in an order of time domain first and then frequency domain, wherein for ROs with the same frequency resource index, every first number (R) of ROs belong to the same RO group;
or,
in the ROs associated with the same SSB index, ROs are ordered in the first time period in an order of time domain first for the ROs with the same frequency resource index one by one, wherein every first number (R) of ROs belong to the same RO group.

105. The method according to supplement 104, wherein when the RO groups are determined, frequency hopping is performed on ROs associated with one SSB index and located at different time domain positions and an identical frequency domain position.

106. The method according to supplement 104 or 105, wherein the association between SSB indices and RO groups repeats for the first time period, wherein the first time period includes a second number (K) of association pattern periods and/or a third number ($G_2$) of first mapping cycles.

107. The method according to supplement 106, wherein the first time period does not exceed a first time length, the first time length being predefined and/or being indicated by the network device.

108. The method according to supplement 107, wherein the first time length is 160ms or 320ms or 640ms or 1280ms or 160×8ms or is related to the first number, the first number being related to a second repetition number.

109. The method according to any one of supplements 1-103, wherein,

ROs in the third time period are ordered in an order of time domain first and then frequency domain in the second time period, wherein every first number (R) of ROs belong to the same RO group;
or,
ROs in the third time period are ordered in an order of time domain first and then frequency domain in the second time period, wherein for ROs with the same frequency resource index, every first number (R) of ROs belong to the same RO group;
or,
in the ROs in the third time period, ROs with the same frequency resource index are ordered one by one in an order of time domain first in the second time period, wherein every first number (R) of ROs belong to the same RO group.

110. The method according to supplement 109, wherein when the RO groups are determined, frequency hopping is performed on ROs associated with one SSB index and located at different time domain positions and an identical frequency domain position.

111. The method according to either one of supplements 109-110, wherein the second time period includes a fourth number of second mapping cycles and/or a fifth number ($K_2$) of third time periods and/or a sixth number of fourth time periods.

112. The method according to any one of supplements 100-111, wherein,

the second time period includes an integral number of fourth time periods, the fourth time periods including an integral number of third time periods, wherein the third time periods include an integral number of RO groups, and one fourth time period includes an integral number of second mapping cycles; or
the second time period includes an integral number ($K_2$) of third time periods, wherein a third time period includes an integral number ($T_2$) of second mapping cycles, and numbers of RO groups and/or numbers of second mapping cycles included in different third time periods in the second time period are identical or different; or
the second time period includes an integral number ($K_2$) of third time periods, wherein a third time period includes an integral number of RO groups, and numbers of RO groups and/or numbers of second mapping cycles included in different third time periods in the second time period are identical or different.

113. The method according to any one of supplements 100-112, wherein the second time period does not exceed a second time length, the second time length being predefined and/or being indicated by the network device.

114. The method according to any one of supplements 109-113, wherein the second time length is 160ms or 320ms or 640ms or 1280ms or 160×8ms or is related to the first number, the first number being related to the second repetition number.

115. The method according to any one of supplements 109-114, wherein the third time period includes a seventh number ($K_1$) PRACH configuration periods.

116. The method according to any one of supplements 109-115, wherein in the first time period and/or the second time period and/or the third time period and/or the fourth time period and/or the first mapping cycle and/or the second mapping cycle, an eighth number (S) of RO groups associated with an SSB are ordered in an order of time domain first and then frequency domain or an order of frequency domain first and then time domain.

117. An information reception method, applicable to a terminal equipment, the method including:

receiving, by the terminal equipment, one or more second configuration information transmitted by a network device, wherein one second configuration information includes one or more first configuration information, one first configuration information including first information for configuring a feature combination, and/or second information for configuring a random access preamble sequence, and/or third information for configuring RO group(s), and/or fourth information for configuring RO(s), and/or fifth information for configuring RO(s).

118. A method for calculating power, wherein the method includes:

for PRACH transmissions corresponding to different second ROs in a random access attempt, calculating transmit power respectively by (a physical layer of) a terminal equipment, or, for PRACH transmissions corresponding to different second ROs in a random access attempt, calculating transmit power of PRACH transmission to which one second RO corresponds by (a physical layer of) a terminal equipment.

119. A method for processing a counter, wherein the method includes:

in a first case, notifying a higher layer to suspend a preamble power ramping counter, or being able to notify a higher layer to suspend a preamble power ramping counter, or not notifying a higher layer to suspend a preamble power ramping counter, by a physical layer of a terminal equipment;
wherein the first case includes that:

the terminal equipment does not transmit a PRACH or transmits a PRACH with reduced power on each (all) of second ROs in a random access attempt; or
the terminal equipment does not transmit a PRACH or transmits a PRACH with reduced power on a part of second ROs in a random access attempt; or
the terminal equipment changes a spatial domain transmission filter before first PRACH transmission in a random access attempt.

120. A method for determining a random access occasion, wherein the method includes:

ordering ROs associated with the same SSB index in a first time period in an order of time domain first and then frequency domain, wherein every first number (R) of ROs belong to the same RO group;
or,
ordering ROs associated with the same SSB index in the first time period in an order of time domain first and then frequency domain, wherein for ROs with the same frequency resource index, every first number (R) of ROs belong to the same RO group;
or,
in the ROs associated with the same SSB index, ordering ROs in the first time period in an order of time domain first for the ROs with the same frequency resource index one by one, wherein every first number (R) of ROs belong to the same RO group;
or,
ordering ROs in a third time period in an order of time domain first and then frequency domain in the second time period, wherein every first number (R) of ROs belong to the same RO group;
or,
ordering ROs in the third time period in an order of time domain first and then frequency domain in the second time period, wherein for ROs with the same frequency resource index, every first number (R) of ROs belong to the same RO group;
or,
in the ROs in the third time period, ordering ROs with the same frequency resource index one by one in an order of time domain first in the second time period, wherein every first number (R) of ROs belong to the same RO group;
or,

in the first time period and/or the second time period and/or the third time period and/or a fourth time period and/or a first mapping cycle and/or a second mapping cycle, ordering an eighth number (S) of RO groups associated with an SSB in an order of time domain first and then frequency domain.

121. An information reception method, applicable to a terminal equipment, the method including:

receiving third configuration information and/or fourth configuration information and/or fifth configuration information and/or DCI by the terminal equipment, the third configuration information and/or the fourth configuration information and/or the fifth configuration information and/or the DCI including third information for configuring RO group(s) and/or information for indicating a first message repetition number;
wherein the third configuration information includes configuration for an SI request based on a first message;
the fourth configuration information is used to configure random access parameters specific to CFRA;
the fifth configuration information is used to configure RACH resources and candidate beams for BFR;
and the DCI is used to trigger a random access procedure, and all bits of a frequency domain resource allocation domain in the DCI are set to be 1.

122. An information transceiving method, applicable to a network device, characterized in that the method includes:

receiving a first message of a random access procedure by the network device on more than one first physical random access channel occasion (PRACH occasion); and
transmitting a second message in response to the first message by the network device after a last first PRACH occasion in the more than one first PRACH occasion.

123. An information reception method, applicable to a network device, characterized in that the method includes:

transmitting more than one second configuration information and/or third configuration information and/or fourth configuration information and/or fifth configuration information and/or DCI by the network device,
wherein one second configuration information includes one or more first configuration information, one first configuration information including first information for configuring a feature combination, and/or second information for configuring a random access preamble sequence, and/or third information for configuring RO group(s), and/or fourth information for configuring RO(s), and/or fifth information for configuring RO(s),
the third configuration information and/or the fourth configuration information and/or the fifth configuration information and/or the DCI including third information for configuring RO group(s) and/or information for indicating a first message repetition number;
wherein the third configuration information includes configuration for an SI request based on a first message;
the fourth configuration information is used to configure random access parameters specific to CFRA;
the fifth configuration information is used to configure RACH resources and candidate beams for BFR;
and the DCI is used to trigger a random access procedure, and all bits of a frequency domain resource allocation domain in the DCI are set to be 1.

124. A terminal equipment, including a memory and a processor, the memory storing a computer program, and the processor being configured to execute the computer program to carry out the method as described in any one of supplements 1-121.

125. A network device, including a memory and a processor, the memory storing a computer program, and the processor being configured to execute the computer program to carry out the method as described in supplement 122 or 123.

126. A communication system, characterized in that the communication system includes the terminal equipment as described in supplement 124 and/or the network device as described in supplement 125.

## Claims

1. An information reception apparatus, applicable to a terminal equipment, wherein the apparatus comprises:
a first receiving unit configured to receive one or more second configuration information transmitted by a network device, wherein one second configuration information comprises one or more first configuration information, one first configuration information comprising first information for configuring a feature combination, and/or second information for configuring a random access preamble sequence, and/or third information for configuring RO group(s), and/or fourth information for configuring RO(s), and/or fifth information for configuring RO(s).

2. The apparatus according to claim 1, wherein the first configuration information is used to configure a feature combination and/or a set of random access resources to which the feature combination corresponds, and the second configuration information is used to configure/define cell-specific random access parameters.

3. The apparatus according to claim 1, wherein one first configuration information comprises one first information, the one first information being used to configure one feature combination.

4. The apparatus according to claim 1, wherein one feature combination comprises or does not comprise first message repetitions and/or a first message repetition number, and/or, one feature combination comprises at most one first message repetitions number, or comprises more than one first message repetition number.

5. The apparatus according to claim 1, wherein the second information is used to configure a random access preamble sequence for the feature combination configured for the first information.

6. The apparatus according to claim 1, wherein the third information is used to configure corresponding RO group(s) for the feature combination configured for the first information.

7. The apparatus according to claim 1, wherein the third information configures the RO group(s) per time period or per mapping cycle, and/or, the third information configures the RO groups based on a first repetition number and/or a first RO group index and/or a second RO group index and/or a first group index and/or a first RO index and/or a second RO index and/or a second group index.

8. The apparatus according to claim 7, wherein the first repetition number is predefined, or is configured by sixth information for configuring the first repetition number, or is configured by seventh information for configuring a first RSRP threshold for the first message repetitions.

9. The apparatus according to claim 7, wherein the first RO group index is used to uniquely identify an RO group within a time period or a mapping cycle.

10. The apparatus according to claim 7, wherein the second RO group index is used to uniquely identify an RO group within a group of RO groups in a time period or a mapping cycle.

11. The apparatus according to claim 7, wherein the first group index is used to uniquely identify a group of RO group(s) within a time period or a mapping cycle.

12. The apparatus according to claim 9 or 10 or 11, wherein the time period is a first time period or a second time period or a third time period or a fourth time period, and the mapping cycle is a first mapping cycle or a second mapping cycle.

13. The apparatus according to claim 7, wherein the first RO index is used to uniquely identify an RO within a time period or a mapping cycle.

14. The apparatus according to claim 7, wherein the second RO index is used to uniquely identify an RO within a group of ROs in a time period or a mapping cycle.

15. The apparatus according to claim 7, wherein the second group index is used to uniquely identify a group of ROs within a time period or a mapping cycle.

16. The apparatus according to claim 13 or 14 or 15, wherein the time period is a first time period or a second time period or a third time period or a fourth time period or a first associated time period or a first associated pattern time period, and the mapping cycle is a first mapping cycle or a second mapping cycle or a third mapping cycle.

17. The apparatus according to claim 1, wherein the third information comprises a first RO group index and/or a second RO group index and/or a first group index and/or a first bitmap and/or a second bitmap and/or an RO group mask index and/or a first RIV value, and/or, the third information comprises a first RO index and/or a second RO index and/or a second group index and/or a third bitmap and/or a fourth bitmap and/or an RO mask index and/or a second RIV value.

18. The apparatus according to claim 17, wherein the third information indicates an RO group by indicating one or more ROs in an RO group.

**19.** The apparatus according to claim 1, wherein the fifth information indicates ROs based on a third RO index, the third RO index denoting a sequence number/sequence numbers of RO(s) with which an SSB in a third mapping cycle is associated.

**20.** An information transmission apparatus, applicable to a network device, wherein the apparatus comprises:
a first transmitting unit configured to transmit one or more second configuration information to a terminal equipment, wherein one second configuration information comprises one or more first configuration information, one first configuration information comprising first information for configuring a feature combination, and/or second information for configuring a random access preamble sequence, and/or third information for configuring RO group(s), and/or fourth information for configuring RO(s), and/or fifth information for configuring RO(s).

**Fig.1**

Terminal equipment        Network device

**Fig.2A**

Terminal equipment        Network device

**Fig.2B**

301

the terminal equipment transmits a first message of a random access procedure  on more than one first physical random access channel occasion

302

the terminal equipment receives a second message in response to the first message after a last first PRACH occasion in the more than one first PRACH occasion

# Fig.3

⋮

**Fig.4**

**Fig.5**

Fig.6

Fig.7

45

EP 4 761 449 A1

Fig.8

Fig.9

Fig.10

Fig. 11

Fig.12

50

Start of SFN 0 (frame 0)

A first time period (20 ms)

The 1$^{st}$ association pattern period (20 ms)

The 1$^{st}$ association period ⟶⟵ The 2$^{nd}$ association period

The 1$^{st}$ PRACH configuration period (10 ms) ⟶⟵ The 1$^{st}$ PRACH configuration period

SSB2 (RO7) | SSB2 (RO8) | SSB2 (RO9) | SSB2 (RO10) | Invalid PRACH occasion | Invalid PRACH occasion | SSB2 (RO11) | SSB2 (RO12)

SSB2 (RO1) | SSB2 (RO2) | SSB2 (RO3) | SSB2 (RO4) | Invalid PRACH occasion | Invalid PRACH occasion | SSB2 (RO5) | SSB2 (RO6)

SSB1 (RO7) | SSB1 (RO8) | SSB1 (RO9) | SSB1 (RO10) | Invalid PRACH occasion | Invalid PRACH occasion | SSB1 (RO11) | SSB1 (RO12)

SSB1 (RO1) | SSB1 (RO2) | SSB1 (RO3) | SSB1 (RO4) | Invalid PRACH occasion | Invalid PRACH occasion | SSB1 (RO5) | SSB1 (RO6)

(repeat)

f

t

⬚ RO of RO group 1    ▨ RO of RO group 2    ▨ RO not used for Msg 1 repetion R

Fig.13

Fig.14

Fig.15

... (repeat)

Start of SFN 0 (frame 0)

A first time period (20 ms)

The 1st association pattern period (20 ms)

The 1st association period

The 2nd association period

The 1st PRACH configuration period

The 1st association period

The 1st PRACH configuration period (10 ms)

The 1st PRACH configuration period

SSB2 (RO7)  SSB2 (RO8)  SSB2 (RO9)  SSB2 (RO10)  Invalid PRACH occasion  Invalid PRACH occasion  SSB2 (RO11)  SSB2 (RO12)

SSB2 (RO1)  SSB2 (RO2)  SSB2 (RO3)  SSB2 (RO4)  Invalid PRACH occasion  Invalid PRACH occasion  SSB2 (RO5)  SSB2 (RO6)

SSB1 (RO7)  SSB1 (RO8)  SSB1 (RO9)  SSB1 (RO10)  Invalid PRACH occasion  Invalid PRACH occasion  SSB1 (RO11)  SSB1 (RO12)

SSB1 (RO1)  SSB1 (RO2)  SSB1 (RO3)  SSB1 (RO4)  Invalid PRACH occasion  Invalid PRACH occasion  SSB1 (RO5)  SSB1 (RO6)

RO of RO group 1    RO of RO group 2    RO not used for Msg1 repetition R

f    t

Fig.16

Start of SFN 0 (frame 0)

A first time period (20 ms)

The 1st association pattern period (20 ms)

The 1st association period | The 2nd association period

The 1st PRACH configuration period (10 ms) | The 1st PRACH configuration period

SSB 7&8 (RO1) | SSB 15&16 (RO1) | SSB 7&8 (RO2) | SSB 15&16 (RO2) | Invalid PRACH occasion | Invalid PRACH occasion | SSB 7&8 (RO3) | SSB 15&16 (RO3)

SSB 5&6 (RO1) | SSB 13&14 (RO1) | SSB 5&6 (RO2) | SSB 12&14 (RO2) | Invalid PRACH occasion | Invalid PRACH occasion | SSB 5&6 (RO3) | SSB 13&14 (RO3)

SSB 3&4 (RO1) | SSB 11&12 (RO1) | SSB 3&4 (RO2) | SSB 11&12 (RO2) | Invalid PRACH occasion | Invalid PRACH occasion | SSB 3&4 (RO3) | SSB 11*12 (RO3)

SSB 1&2 (RO1) | SSB 9&10 (RO1) | SSB 1&2 (RO2) | SSB 9&10 (RO2) | Invalid PRACH occasion | Invalid PRACH occasion | SSB 1&2 (RO3) | SSB 9&10 (RO3)

... (repeat)

f

t

RO of RO group 1

RO not used for Msg1 repetition R

Fig.17

Start of SFN 0 (frame 0)

|←————————————————A first time period (20 ms)————————————————→|

|←————————————————The 1st association pattern period (20 ms)————————————————→|

|←————————The 1st association period————————→|←————————The 2nd association period————————→|

|←————The 1st PRACH configuration period (10 ms)————→|←————The 1st PRACH configuration period————→|

**Fig.18**

| | RO of RO group 1 | | RO of RO group 2 | | RO not used for Msg1 repetition R |

SSB2 (RO7), SSB2 (RO8), SSB2 (RO9), SSB2 (RO10), Invalid PRACH occasion, Invalid PRACH occasion, SSB2 (RO11), SSB2 (RO12)

SSB2 (RO1), SSB2 (RO2), SSB2 (RO3), SSB2 (RO4), Invalid PRACH occasion, Invalid PRACH occasion, SSB2 (RO5), SSB2 (RO6)

SSB1 (RO7), SSB1 (RO8), SSB1 (RO9), SSB1 (RO10), Invalid PRACH occasion, Invalid PRACH occasion, SSB1 (RO11), SSB1 (RO12)

SSB1 (RO1), SSB1 (RO2), SSB1 (RO3), SSB1 (RO4), Invalid PRACH occasion, Invalid PRACH occasion, SSB1 (RO5), SSB1 (RO6)

... (repeat)

Start of SFN 0 (frame 0)

A first time period (20 ms)

The 1st association pattern period (20 ms)

The 1st association period — The 2nd association period

The 1st PRACH configuration period (10 ms) — The 1st PRACH configuration period

SSB1 (RO19) SSB1 (RO20) SSB1 (RO21) SSB1 (RO22) Invalid PRACH occasion Invalid PRACH occasion SSB1 (RO23) SSB1 (RO24)

SSB1 (RO13) SSB1 (RO14) SSB1 (RO15) SSB1 (RO16) Invalid PRACH occasion Invalid PRACH occasion SSB1 (RO17) SSB1 (RO18)

SSB1 (RO7) SSB1 (RO8) SSB1 (RO9) SSB1 (RO10) Invalid PRACH occasion Invalid PRACH occasion SSB1 (RO11) SSB1 (RO12)

SSB1 (RO1) SSB1 (RO2) SSB1 (RO3) SSB1 (RO4) Invalid PRACH occasion Invalid PRACH occasion SSB1 (RO5) SSB1 (RO6)

... (repeat)

RO of RO group 1

RO of RO group 2

RO not used for Msg 1 repetition R

RO of RO group 3

RO of RO group 4

Fig. 19

57

Fig.20

Fig.21

**Fig.22**

**Fig.23**

Fig.24

Fig.25

**Fig.26**

Start of SFN 0 (frame 0)

The 1st RO grouping period

The 1st PRACH configuration period (10ms)

The 2nd RO grouping period

The 1st PRACH configuration period

The 2nd PRACH configuration period

(RO1) (RO2) (RO3) (RO4) (RO1) (RO2) (RO3) (RO4)

Invalid PRACH occasion

(RO1) (RO2) (RO3) (RO4) (RO5) (RO6) (RO7) (RO8)

t

f

**Fig.27**

Fig.28

**Fig.29**

**Fig.30**

**Fig.31**

Fig.32

Fig.33

Fig.34

**Fig.35**

Fig.36

Fig.37

EP 4 761 449 A1

75

Fig.38

3901

the network device receives a first message of a random access procedure on more than one first physical random access channel occasion

3902

the network device transmits a second message in response to the first message after a last first PRACH occasion in the more than one first PRACH occasion

## Fig.39

4000

Information transceiving apparatus

4001

First transmitting unit

4002

First receiving unit

## Fig.40

**4100**

Information transceiving
apparatus

**4101**

Second receiving unit

**4202**

Second transmitting
unit

# Fig.41

**4200**

Network
device

**4250**

**4220**

Memory

**4210**

**4240**

**4230**

Processor

Transceiver

Program

# Fig.42

**4300**

Terminal
equipment

**4310**

**4330**

**4340** — Input unit

**4320** — Memory
Buffer
Application/
function
Data
Program

Processor

Communication module
(transmitter/receiver)

Display — **4350**

Power supply — **4360**

# Fig.43

Fig.44

4501

a terminal equipment receives one or more second configuration information transmitted by a network device, wherein one second configuration information includes one or more first configuration information, one first configuration information including first information for configuring a feature combination, and/or second information for configuring a random access preamble sequence, and/or third information for configuring RO group(s), and/or fourth information for configuring RO(s), and/or fifth information for configuring RO(s).

**Fig.45**

4601

a network device transmits one or more second configuration information to a terminal equipment, wherein one second configuration information includes one or more first configuration information, one first configuration information including first information for configuring a feature combination, and/or second information for configuring a random access preamble sequence, and/or third information for configuring RO group(s), and/or fourth information for configuring RO(s), and/or fifth information for configuring RO(s)

**Fig.46**

## INTERNATIONAL SEARCH REPORT

| International application No. |
|---|
| **PCT/CN2023/112767** |

### A. CLASSIFICATION OF SUBJECT MATTER

H04W 74/08(2024.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXT, DWPI: 随机接入, 覆盖增强, 重复, 机会, 组, 资源, 配置, 前导序列, 索引, random access, coverage enhancement, repetition, occasion, RO, group, resource, configuration, preamble, index

### C. DOCUMENTS CONSIDERED TO BE RELEVANT

| Category* | Citation of document, with indication, where appropriate, of the relevant passages | Relevant to claim No. |
|---|---|---|
| X | CN 116456487 A (VIVO COMMUNICATION TECHNOLOGY CO., LTD.) 18 July 2023 (2023-07-18) description, paragraphs 0003-0426, and figures 1-17 | 1-20 |
| X | CN 116367313 A (VIVO COMMUNICATION TECHNOLOGY CO., LTD.) 30 June 2023 (2023-06-30) description, paragraphs 0003-0579, and figures 1-12 | 1-20 |
| X | CN 116567815 A (SPREADTRUM SEMICONDUCTOR (NANJING) CO., LTD.) 08 August 2023 (2023-08-08) description, paragraphs 0002-0314, and figures 1-9 | 1-20 |
| X | CN 107251627 A (NOKIA SOLUTIONS AND NETWORKS OY) 13 October 2017 (2017-10-13) description, paragraphs 0002-0099, and figures 1-7c | 1-20 |
| X | US 2023189347 A1 (INTEL CORP.) 15 June 2023 (2023-06-15) description, paragraphs 0021-0230, and figures 1-13 | 1-20 |
| X | US 2022408491 A1 (LENOVO (BEIJING) LTD.) 22 December 2022 (2022-12-22) description, paragraphs 0021-0082, and figures 1-10 | 1-20 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 April 2024** | **12 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/112767** |

**C.    DOCUMENTS CONSIDERED TO BE RELEVANT**

| Category* | Citation of document, with indication, where appropriate, of the relevant passages | Relevant to claim No. |
|---|---|---|
| A | CN 112106436 A (SHARP CORP. et al.) 18 December 2020 (2020-12-18)<br>entire document | 1-20 |

Form PCT/ISA/210 (second sheet) (July 2022)

**INTERNATIONAL SEARCH REPORT**
Information on patent family members

International application No.

**PCT/CN2023/112767**

| Patent document cited in search report | | | Publication date (day/month/year) | Patent family member(s) | | | Publication date (day/month/year) |
|---|---|---|---|---|---|---|---|
| CN | 116456487 | A | 18 July 2023 | WO | 2023131174 | A1 | 13 July 2023 |
| CN | 116367313 | A | 30 June 2023 | WO | 2023116883 | A1 | 29 June 2023 |
| CN | 116567815 | A | 08 August 2023 | WO | 2023143363 | A1 | 03 August 2023 |
| CN | 107251627 | A | 13 October 2017 | EP | 3852479 | A1 | 21 July 2021 |
| | | | | US | 2018176957 | A1 | 21 June 2018 |
| | | | | PL | 3251438 | T3 | 09 August 2021 |
| | | | | EP | 3251438 | A1 | 06 December 2017 |
| | | | | KR | 20170110645 | A | 11 October 2017 |
| | | | | ES | 2868775 | T3 | 21 October 2021 |
| | | | | WO | 2016119237 | A1 | 04 August 2016 |
| US | 2023189347 | A1 | 15 June 2023 | | None | | |
| US | 2022408491 | A1 | 22 December 2022 | WO | 2021087978 | A1 | 14 May 2021 |
| | | | | EP | 4055972 | A1 | 14 September 2022 |
| | | | | CN | 114651518 | A | 21 June 2022 |
| CN | 112106436 | A | 18 December 2020 | WO | 2019216341 | A1 | 14 November 2019 |
| | | | | US | 2021120592 | A1 | 22 April 2021 |
| | | | | KR | 20210006442 | A | 18 January 2021 |
| | | | | JP | 2019198015 | A | 14 November 2019 |
| | | | | EP | 3793310 | A1 | 17 March 2021 |
| | | | | IN | 202047053508 | A | 25 December 2020 |

Form PCT/ISA/210 (patent family annex) (July 2022)